# EUROPEAN PATENT APPLICATION

(11) **EP 4 247 084 A1**
(43) Date of publication of application: **20.09.2023**
(21) Application number: 21902433.8
(22) Date of filing: 29.11.2021
(51) Int. Cl.: H04W 72/04

(54) **RESOURCE ALLOCATION METHOD AND APPARATUS**

(30) Priority: 08.12.2020 CN 202011444502; 02.02.2021 CN 202110141112
(71) Applicant: Huawei Technologies Co., Ltd., Shenzhen, Guangdong 518129 (CN)
(72) Inventor: PENG, Lan, Shenzhen, Guangdong 518129 (CN); LI, Xueru, Shenzhen, Guangdong 518129 (CN)
(74) Representative: Epping - Hermann - Fischer
(86) International application number: PCT/CN2021/134109
(87) International publication number: WO 2022/121726

(57) **Abstract**

A resource allocation method and an apparatus are provided, to reduce signaling overheads and a communication delay in a scenario in which a first terminal device and a second terminal device exchange information/a signal. In this application, the first terminal device sends a resource request to a first apparatus, where the resource request is used to request a first resource and a second resource, the first resource is used by the first terminal device to send a first signal to the second terminal device, and the second resource is used by the first terminal device to receive a second signal from the second terminal device. The first terminal device receives a resource response sent by the first apparatus in response to the resource request.

## Description

### CROSS-REFERENCE TO RELATED APPLICATIONS

This application claims priority to Chinese Patent Application No. 202011444502.5, filed with the China National Intellectual Property Administration on December 08, 2020 and entitled "METHOD FOR PROVIDING ASSISTANT INFORMATION AND UE", which is incorporated herein by reference in its entirety; and this application claims priority to Chinese Patent Application No. 202110141112.9, filed with the China National Intellectual Property Administration on February 02, 2021 and entitled "RESOURCE ALLOCATION METHOD AND APPARATUS", which is incorporated herein by reference in its entirety.

### TECHNICAL FIELD

This application relates to the field of communication technologies, and in particular, to a resource allocation method and an apparatus.

### BACKGROUND

A sidelink (Sidelink, SL) communication technology, as an important branch of a cellular internet of things technology, is a communication technology for direct connection between terminal devices, and is also referred to as a device-to-device communication (device-to-device communication, D2D) technology. The communication technology creates a wide range of possibilities for internet of things applications. For example, vehicle-to-everything (vehicle-to-everything, V2X) is scenario extension and technology evolution based on a sidelink architecture.

Spectrum resources occupied by a sidelink may be classified into two types: licensed spectrum (licensed spectrum) and unlicensed spectrum (unlicensed spectrum). The licensed spectrum is strictly limited and protected. When two terminal devices communicate on the licensed spectrum, a network device needs to perform resource scheduling. However, the unlicensed spectrum is open and can be used to improve performance and increase a rate. On this basis, a group header (group header, GH) terminal device and a group member (group member, GM) terminal device may form a terminal device group. The group header terminal device functions like the network device, and may perform resource scheduling for communication between any two group member terminal devices in the group.

Regardless of the licensed spectrum or the unlicensed spectrum, when a first terminal device needs to send information to a second terminal device, the first terminal device needs to first request a resource from the network device or the group header terminal device, and then send information on the requested resource. In this case, if the second terminal device further needs to feed back information to the first terminal device, the second terminal device also needs to request a resource from the network device or the group header terminal device, and feed back information on the requested resource. In other words, if the two terminal devices exchange information, each terminal device needs to request a resource before sending information to a peer end. As a result, signaling overheads and a delay are increased.

### SUMMARY

This application provides a resource allocation method and an apparatus, to reduce signaling overheads and a communication delay in a scenario in which a first terminal device and a second terminal device exchange information/a signal.

According to a first aspect, this application provides a resource allocation method. The method includes: A first terminal device sends a resource request to a first apparatus, where the resource request is used to request a first resource and a second resource, the first resource is used by the first terminal device to send a first signal to a second terminal device, and the second resource is used by the first terminal device to receive a second signal from the second terminal device. The first terminal device receives a resource response sent by the first apparatus in response to the resource request.

In this way, before sending the first signal to the second terminal device, the first terminal device requests, from the first apparatus, the first resource used by the first terminal device to send the first signal, and requests the second resource used by the second terminal device to send the second signal. Therefore, when sending the second signal to the first terminal device, the second terminal device does not need to request a resource from the first apparatus again, but may use the second resource requested by the first terminal device for the second terminal device. This helps reduce signaling overheads between the second terminal device and the first apparatus, and a communication delay between the first terminal device and the second terminal device.

With reference to the first aspect, in a first optional implementation of the first aspect, the first apparatus may be a group header terminal device. For example, the group header terminal device, the first terminal device, and the second terminal device may form a terminal device group, and the group header terminal device may schedule an unlicensed spectrum resource for another group member terminal device in the terminal device group. This helps implement resource scheduling flexibility, and helps improve performance and a transmission rate of a communication system.

With reference to the first aspect, in a second optional implementation of the first aspect, the first apparatus may be a network device, the first terminal device and the second terminal device are in a cell served by the network device, and the network device may schedule, for the first terminal device and the second terminal device, a resource for communication between the first terminal device and the second terminal device. This implementation is applicable to a V2X mode 1 (mode-1) scenario.

With reference to the first aspect, the first optional implementation of the first aspect, or the second optional implementation of the first aspect, in a third optional implementation of the first aspect, the resource request includes a data volume of first data in the first signal and/or a data volume of second data in the second signal. In this way, the first apparatus may directly determine, based on the data volume of the first data in the resource request, a volume of a resource allocated to the first terminal device, and determine, based on the data volume of the second data in the resource request, a volume of a resource allocated to the second terminal device. This helps improve accuracy of resource allocation.

With reference to any one of the first aspect, or the first to the third optional implementations of the first aspect, in a fourth optional implementation of the first aspect, the resource request includes a type of the first signal and/or a feedback type of the second signal. In this way, when receiving resource requests from a plurality of terminal devices, the first apparatus may determine, based on types of first signals and/or feedback types of second signals in the resource requests of the terminal devices, how to allocate resources to the plurality of terminal devices.

With reference to any one of the first aspect, the first or the second optional implementation of the first aspect, in a fifth optional implementation of the first aspect, the first terminal device includes preconfigured information, the preconfigured information includes a plurality of pieces of index information, and each piece of index information corresponds to one preset resource. The resource request includes first index information, the first index information is one of the plurality of pieces of index information, and the first resource is a preset resource corresponding to the first index information. In this way, the first apparatus may determine, based on the first index information included in the resource request and a correspondence in the preconfigured information, a resource allocated to the first terminal device. The first index information occupies a relatively small quantity of bits. This helps reduce signaling overheads when the first terminal device sends the resource request. In addition, this manner is applicable to an implementation in which the first terminal device requests, from the first apparatus, a resource for sending a reference signal. The first terminal device may determine an index corresponding to the resource required for sending the reference signal, so that the first apparatus allocates a resource used by the first terminal device to send the reference signal.

With reference to the fifth optional implementation of the first aspect, in a sixth optional implementation of the first aspect, the preconfigured information further includes a plurality of types, and each type corresponds to at least one piece of index information. The resource request further includes a type of the first signal, the type of the first signal is one of the plurality of types, and the first index information is one of at least one piece of index information corresponding to the type of the first signal. In this way, the first resource is indicated by using two dimensions (that is, the type and the index), so that signaling overheads when the first terminal device sends the resource request can be further reduced.

With reference to the fifth optional implementation of the first aspect or the sixth optional implementation of the first aspect, in a seventh optional implementation of the first aspect, the resource request further includes feedback information of the second signal, and the feedback information of the second signal includes a feedback type of the second signal and a feedback element corresponding to the feedback type of the second signal. In this way, the first apparatus may predict, based on the feedback information of the second signal and the feedback element corresponding to the feedback type of the second signal, a data volume of data in the second signal, and then determine, based on the data volume of the data in the second signal, a resource volume of a resource allocated to the second terminal device. This helps improve accuracy of resource allocation.

With reference to any one of the first aspect, or the first to the seventh optional implementations of the first aspect, in an eighth optional implementation of the first aspect, the resource request further includes feedback time information, and the feedback time information indicates a time domain resource and/or a period resource on which the second signal is carried. In this way, the time domain resource and/or the period resource allocated by the first apparatus to the second terminal device can meet a requirement that the first terminal device expects the second terminal device to feed back the second signal. This helps improve reliability of communication between the first terminal device and the second terminal device.

With reference to any one of the first aspect, or the first to the eighth optional implementations of the first aspect, in a ninth optional implementation of the first aspect, the method further includes: The first terminal device sends control information to the second terminal device, where the control information includes first indication information and/or second indication information obtained by the first terminal device from the resource response, the first indication information indicates a resource on which the first terminal device sends the first signal, and the second indication information indicates a resource on which the first terminal device receives the second signal. In this way, the first terminal device may indicate, to the second terminal device, the resource on which the first terminal device sends the first signal, so that the second terminal device can accurately receive the first signal. The first terminal device may further indicate, to the second terminal device, a resource on which the second terminal device sends the second signal, so that the second terminal device can send the second signal on the corresponding resource. In this way, the second terminal device does not need to request a resource from the first apparatus. This helps reduce signaling overheads between the second terminal device and the first apparatus, and can reduce a communication delay of a signal exchanged between the first terminal device and the second terminal device. Further, the second terminal device does not need to indicate, to the first terminal device again, the resource on which the second terminal device sends the second signal. This helps reduce signaling overheads between the first terminal device and the second terminal device. In addition, the first terminal device does not need to blindly detect the control information from the second terminal device, thereby reducing power consumption of the first terminal device.

With reference to the ninth optional implementation of the first aspect, in a tenth optional implementation of the first aspect, the control information further includes a preset feedback type, and the feedback type of the second signal is the same as the preset feedback type in the control information. In this way, the first terminal device can indicate the second terminal device to feed back the feedback type of the second signal. This helps improve reliability of communication between the first terminal device and the second terminal device.

With reference to any one of the first aspect, or the first to the tenth optional implementations of the first aspect, in an eleventh optional implementation of the first aspect, the method further includes: The first terminal device sends the first signal to the second terminal device based on the first indication information in the resource response, and/or the first terminal device receives the second signal from the second terminal device based on the second indication information in the resource response. In this way, the first terminal device sends the first signal to the second terminal device based on the first indication information, and the second terminal device receives the first signal from the first terminal device based on the first indication information. Similarly, the second terminal device sends the second signal to the first terminal device based on the second indication information, and the first terminal device receives the second signal from the second terminal device based on the second indication information. In this way, reliability of communication between the first terminal device and the second terminal device can be improved.

With reference to any one of the first aspect, or the first to the eleventh optional implementations of the first aspect, in a twelfth optional implementation of the first aspect, the first terminal device sends the first signal to the second terminal device, and the first signal may trigger the second terminal device to send the second signal to the first terminal device. This implementation is applicable to a channel state information (channel state information, CSI) measurement scenario, a positioning measurement scenario, an assistant information feedback scenario, a power control information feedback scenario, a data exchange scenario, and the like.

With reference to any one of the first aspect, or the first to the twelfth optional implementations of the first aspect, in a thirteenth optional implementation of the first aspect, the feedback type includes at least one or more of a channel state type, a positioning information type, an assistant information type, and a power control type. A feedback element corresponding to the channel state type includes at least one or more of a precoding matrix indicator (precoding matrix indicator, PMI), a channel quality indicator (channel quality indicator, CQI), and a rank indicator (rank indicator, RI). A feedback element corresponding to the positioning information type includes at least one or more of a round trip time (round trip time, RTT), an angle of arrival (angle of arrival, AoA), and an angle of departure (angle of departure, AoD). A feedback element corresponding to the assistant information type includes at least one or more of a resource identifier (resource ID), a reference signal received power (reference signal received power, RSRP), and a signal to interference plus noise ratio (signal to interference and noise ratio, SINR). A feedback element corresponding to the power control type includes at least signal power and/or interference power.

According to a second aspect, this application provides a resource allocation method. The method includes: A first apparatus receives a resource request from a first terminal device, where the resource request is used to request a first resource and a second resource, the first resource is used by the first terminal device to send a first signal to a second terminal device, and the second resource is used by the first terminal device to receive a second signal from the second terminal device. The first apparatus sends a resource response to the first terminal device in response to the resource request.

With reference to the second aspect, the method includes any one of the first to the thirteenth optional implementations of the first aspect.

According to a third aspect, an embodiment of this application provides a communication apparatus. The apparatus has a function of implementing the first terminal device in any one of the first aspect or the optional implementations of the first aspect, and the apparatus may be a terminal device, or may be a chip included in a terminal device.

Alternatively, the communication apparatus may have a function of implementing the first apparatus in any one of the second aspect or the optional implementations of the second aspect. The apparatus may be a network device, or may be a chip included in a network device, or the apparatus may be a terminal device, or may be a chip included in a terminal device.

The functions of the communication apparatus may be implemented by hardware, or may be implemented by hardware executing corresponding software. The hardware or the software includes one or more modules, units, or means (means) corresponding to the functions.

In an optional implementation, a structure of the apparatus includes a processing module and a transceiver module. The processing module is configured to support the apparatus in performing a corresponding function of the first terminal device in any one of the first aspect or the implementations of the first aspect, or performing a corresponding function of the first apparatus in any one of the second aspect or the implementations of the second aspect. The transceiver module is configured to support communication between the apparatus and another communication device. For example, when the apparatus is the first terminal device, the apparatus may send a resource request to the first apparatus. The communication apparatus may further include a storage module. The storage module is coupled to the processing module, and stores program instructions and data that are necessary for the apparatus. In an example, the processing module may be a processor, a communication module may be a transceiver, and the storage module may be a memory. The memory may be integrated with the processor, or may be disposed separately from the processor.

In another optional implementation, a structure of the apparatus includes a processor, and may further include a memory. The processor is coupled to the memory, and may be configured to execute computer program instructions stored in the memory, to enable the apparatus to perform the method in any one of the first aspect or the possible implementations of the first aspect, or perform the method in any one of the second aspect or the possible implementations of the second aspect. Optionally, the apparatus further includes a communication interface, and the processor is coupled to the communication interface. When the apparatus is a network device or a terminal device, the communication interface may be a transceiver or an input/output interface. When the apparatus is a chip included in a network device or a chip included in a terminal device, the communication interface may be an input/output interface of the chip. Optionally, the transceiver may be a transceiver circuit, and the input/output interface may be an input/output circuit.

According to a fourth aspect, an embodiment of this application provides a chip system. The chip system includes a processor, and the processor is coupled to a memory. The memory is configured to store a program or instructions, and when the program or the instructions are executed by the processor, the chip system is enabled to implement the method in any one of the first aspect or the possible implementations of the first aspect, or perform the method in any one of the second aspect or the possible implementations of the second aspect.

Optionally, the chip system further includes an interface circuit, and the interface circuit is configured to exchange code instructions to the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips.

According to a fifth aspect, an embodiment of this application provides a computer-readable storage medium. The computer-readable storage medium stores a computer program or instructions, and when the computer program or the instructions are executed, a computer is enabled to perform the method in any one of the first aspect or the possible implementations of the first aspect, or perform the method in any one of the second aspect or the possible implementations of the second aspect.

According to a sixth aspect, an embodiment of this application provides a computer program product. When a computer reads and executes the computer program product, the computer is enabled to perform the method in any one of the first aspect or the possible implementations of the first aspect, or perform the method in any one of the second aspect or the possible implementations of the second aspect.

According to a seventh aspect, an embodiment of this application provides a communication system. The communication system includes a first terminal device, a second terminal device, and a first apparatus. The first terminal device is configured to perform the method according to any one of the first aspect or the optional implementations of the first aspect, and the first apparatus is configured to perform the method according to any one of the second aspect or the optional implementations of the second aspect.

For technical effects that can be achieved in any one of the second aspect to the seventh aspect, refer to descriptions of beneficial effects in any one of the first aspect or the optional implementations of the first aspect. Details are not described herein again.

### BRIEF DESCRIPTION OF DRAWINGS

FIG. 1 is a schematic diagram of an architecture of a communication system according to this application;
FIG. 2 is a schematic flowchart of an information transmission method according to this application;
FIG. 3 is a schematic diagram of an architecture of another communication system according to this application;
FIG. 4 is a schematic flowchart of another information transmission method according to this application;
FIG. 5 is a schematic diagram of one group of V2X scenarios according to this application;
FIG. 6 is a schematic diagram of a family scenario according to this application;
FIG. 7 is a schematic flowchart of a resource allocation method according to this application;
FIG. 8 is a schematic diagram of fields included in a resource request according to this application;
FIG. 9 is a schematic diagram of fields included in another resource request according to this application;
FIG. 10 is a schematic flowchart of exchanging a signal between a first terminal device and a second terminal device according to this application;
FIG. 11 is another schematic flowchart of exchanging a signal between a first terminal device and a second terminal device according to this application;
FIG. 12 is a schematic diagram of resource allocation according to this application;
FIG. 13 is another schematic diagram of resource allocation according to this application;
FIG. 14 is a schematic diagram of a structure of a communication apparatus according to this application; and
FIG. 15 is a schematic diagram of a structure of another communication apparatus according to this application.

### DESCRIPTION OF EMBODIMENTS

To make objectives, technical solutions, and advantages of embodiments of this application clearer, the following further describes embodiments of this application in detail with reference to the accompanying drawings.

In the following descriptions, some terms in the embodiments of this application are explained and described, to help a person skilled in the art have a better understanding.
1. A terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing devices. The terminal device is configured to connect humans, things, machines, and the like, and may be widely used in various scenarios. For example, the terminal device includes but not limited to a terminal device in the following scenarios: cellular communication, device-to-device communication (device-to-device, D2D), vehicle-to-everything (vehicle to everything, V2X), machine-to-machine/machine-type communications (machine-to-machine /machine-type communications, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), a smart furniture, a smart office, a smart wearable, smart transportation, a smart city (smart city), a drone, and a robot. The terminal device sometimes may be referred to as user equipment (user equipment, UE), a terminal, an access station, a UE station, a remote station, a wireless communication device, a user apparatus, or the like.
2. A network device includes, for example, an access network (access network, AN) device such as a base station (for example, an access point), and may be a device that communicates with a terminal device over an air interface through one or more cells in an access network. Alternatively, for example, a network device in a V2X technology is a road side unit (road side unit, RSU). The base station may be configured to mutually convert a received over-the-air frame and an internet protocol (IP) packet, and serve as a router between a terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in an LTE system or a long term evolution-advanced (long term evolution-advanced, LTE-A) system, or may include a next generation NodeB (next generation NodeB, gNB) in a 5G NR system, or may include a centralized unit (centralized unit, CU) and a distributed unit (distributed unit, DU) in a cloud radio access network (cloud radio access network, Cloud RAN) system. This is not limited in the embodiments of this application.
3. A terminal device group includes a plurality of terminal devices. Any two terminal devices in the terminal device group may exchange sidelink information over a sidelink. The terminal device group includes a group header terminal device and a group member terminal device. When sending a synchronization signal block (synchronization signal block, SSB) to the group member terminal device in the group, the group header terminal device may reduce transmit power to save energy. The group member terminal device may monitor only the SSB of the group header terminal device to maintain synchronization, without receiving other synchronization information from outside the group, to maintain uniqueness and save energy.

Further, a terminal device group manner has the following effects:
(1) Each terminal device group corresponds to a respective resource pool, and a group header terminal device in the terminal device group may uniformly allocate resources in the resource pool. This helps improve resource allocation efficiency.
(2) The group header terminal device in the terminal device group may measure channel information, service load (load), and the like of each group member terminal device in the group, thereby better controlling a sidelink in the group.
(3) In a high-load (heavy traffic load) scenario or a scenario in which there are a relatively large quantity of users, if all terminal devices contend for a resource autonomously, a probability of a resource conflict is very high. However, the group header terminal device in the terminal device group coordinates resource allocation, thereby helping avoid a resource conflict event.
(4) When a base station schedules a resource, the base station allocates a resource pool to each terminal device group. The group header terminal device in each terminal device group may uniformly allocate resources in the resource pool, and a group member terminal device does not need to request a resource from the base station. This reduces an air interface delay.

4. V2X specifically includes communication between vehicles, communication between a vehicle and a person (including a pedestrian, a person riding a bicycle, a driver, or a passenger), and communication between a vehicle and a network device.

In a V2X communication process, a terminal device (also referred to as a transmit terminal device) serving as a transmit end sends sidelink information to a terminal device (also referred to as a receive terminal device) serving as a receive end, and the receive terminal device receives and decodes the sidelink information. In V2X, there are two resource allocation modes for the transmit terminal device. One resource allocation mode is a mode-1 (mode-1). In the mode-1, a base station allocates a resource to the transmit terminal device. The other resource allocation mode is a mode-2. In the mode-2, the transmit terminal device selects a resource or contends for a resource autonomously.

The mode-1 (mode-1) is mainly applied to V2X communication when there is network coverage, and a base station performs resource allocation. Specifically, the mode-1 may further include a dynamic grant (dynamic grant, DG) mode and a configured grant (configured grant, CG) mode. In the DG mode of the mode-1, the base station schedules, by using downlink control information (downlink control information, DCI), the transmit terminal device to send sidelink information to the receive terminal device. In the CG mode of the mode-1, the base station configures a related sidelink time-frequency resource by using higher layer signaling, for example, radio resource control (radio resource control, RRC) signaling. In the mode-2, the transmit terminal device does not depend on the base station to select the sidelink time-frequency resource. This mode is not limited to network coverage. When there is no network coverage, the transmit terminal device may also use this mode for communication.

5. A resource may also be referred to as a time-frequency resource, and includes a time domain resource and a frequency domain resource. The frequency domain resource may be one or more resource blocks (resource block, RB), one or more resource elements (resource element, RE), one or more carriers (carrier), one or more bandwidth parts (bandwidth part, BWP), or the like. The time domain resource may be one or more subframes, one or more slots, one or more symbols in one or more slots, or the like.

6. Terms "system" and "network" may be used interchangeably in the embodiments of this application. "At least one" means one or more, and "a plurality of' means two or more. In addition, "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. Moreover, "at least one of the following items (pieces)" or a similar expression thereof means any combination of these items, including a singular item (piece) or any combination of a plurality of items (pieces). For example, at least one item (piece) of a, b, or c may represent: a, b, c, a and b, a and c, b and c, or a, b, and c, where a, b, and c may be singular or plural.

The method provided in this application may be applied to various communication systems, for example, a long term evolution (long term evolution, LTE) system, a fifth generation (5G) communication system, a hybrid architecture of LTE and 5G, a 5G new radio (new radio, NR) system, and a new communication system emerging in future communication development.

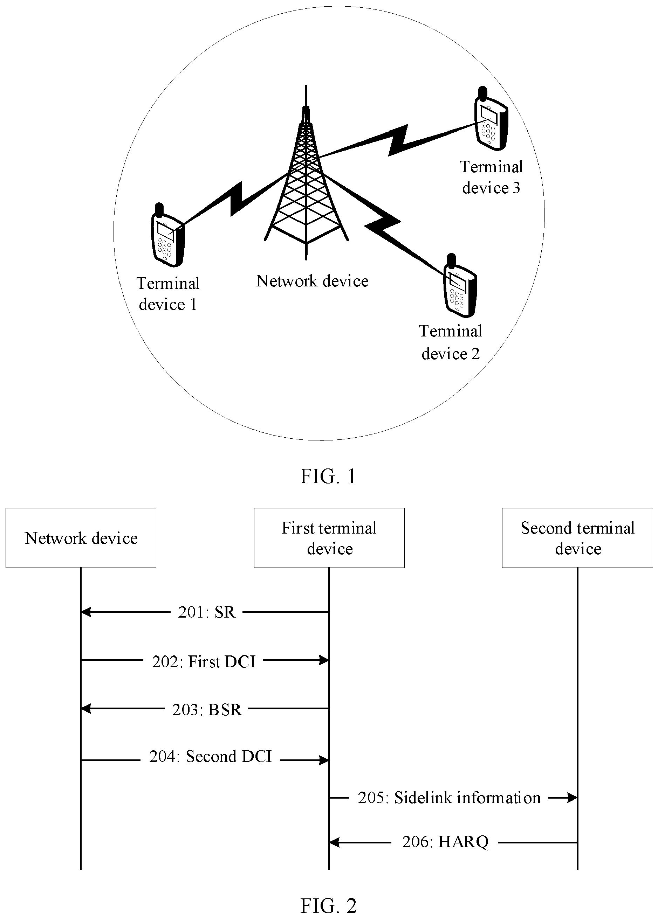

FIG. 1 shows an example communication system according to this application. A network device and three terminal devices (which are respectively represented by a terminal device 1 to a terminal device 3) form a single-cell communication system. The terminal device 1 to the terminal device 3 may separately or simultaneously send uplink information to the network device, the network device may separately or simultaneously send downlink information to the terminal device 1 to the terminal device 3. The terminal device 1 to the terminal device 3 may also send sidelink information to each other.

It may be understood that FIG. 1 is merely an example for description, and does not specifically limit a quantity of terminal devices, a quantity of network devices, and a quantity of cells served by the network device in the communication system.

In the communication system, sidelink information may be transmitted between any two terminal devices. For example, a terminal device that is in the two terminal devices and that is configured to send sidelink information may be referred to as a first terminal device (or a transmit terminal device or Tx UE), and a terminal device that is configured to receive the sidelink information is referred to as a second terminal device (or a receive terminal device or Rx UE).

For example, the first terminal device and the second terminal device may be any two of the terminal device 1 to the terminal device 3 in FIG. 1. For example, the first terminal device and the second terminal device may be respectively the terminal device 1 and the terminal device 3. For another example, the first terminal device and the second terminal device may be respectively the terminal device 1 and the terminal device 2.

For details of transmitting sidelink information between the first terminal device and the second terminal device, refer to an example schematic flowchart of an information transmission method shown in FIG. 2. In the schematic flowchart:
Step 201: The first terminal device sends an uplink scheduling request (scheduling request, SR) to a network device. Correspondingly, the network device receives the SR, and determines an uplink resource used by the first terminal device to send a buffer state report (buffer state report, BSR).
Step 202: The network device sends first DCI to the first terminal device. Correspondingly, the first terminal device receives the first DCI, and determines, from the first DCI, the uplink resource used to send the BSR.
Step 203: The first terminal device sends the BSR to the network device by using the uplink resource, where the BSR indicates a data volume of sidelink information sent by the first terminal device to the second terminal device. Correspondingly, the network device receives the BSR by using the uplink resource, and determines, based on the BSR, a sidelink resource used by the first terminal device to send the sidelink information to the second terminal device.
Step 204: The network device sends second DCI to the first terminal device. Correspondingly, the first terminal device receives the second DCI, and determines, from the second DCI, the sidelink resource used to send the sidelink information to the second terminal device.
Step 205: The first terminal device sends the sidelink information to the second terminal device by using the sidelink resource. Correspondingly, the second terminal device receives the sidelink information by using the sidelink resource.

The sidelink information includes sidelink control information and/or sidelink data information. That the first terminal device sends the sidelink information to the second terminal device may also be understood as that the first terminal device sends the sidelink control information and/or the sidelink data information to the second terminal device, or may be understood as that the first terminal device sends a PSCCH (physical sidelink control channel, physical sidelink control channel) and/or a PSSCH (physical sidelink shared channel, physical sidelink shared channel) to the second terminal device. Correspondingly, the second terminal device receives the sidelink control information and/or the sidelink data information from the first terminal device by using the sidelink resource, or receives the PSCCH and/or the PSSCH from the first terminal device by using the sidelink resource.

Step 206: The second terminal device sends a hybrid automatic repeat request (hybrid automatic repeat request, HARQ) to the first terminal device.

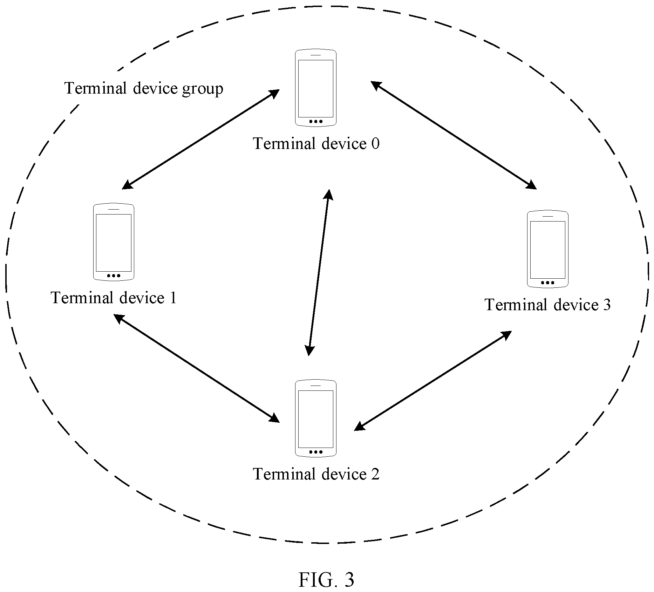

FIG. 3 shows another example communication system according to this application. A group header terminal device (represented by a terminal device 0) and three group member terminal devices (represented by a terminal device 1 to a terminal device 3) form a terminal device group. The group header terminal device may partially serve as a network device, and is configured to manage the plurality of group member terminal devices. From a perspective of a product form, the group header terminal device is also a type of terminal device, and has only some functions of the network device, for example, central control, resource configuration, and data receiving. The terminal device 1 to the terminal device 3 may separately or simultaneously send sidelink information to the group header terminal device. The group header terminal device may separately or simultaneously send sidelink information to the terminal device 1 to the terminal device 3. The terminal device 1 to the terminal device 3 may also send sidelink information to each other.

It should be understood that FIG. 3 is merely an example for description, and does not specifically limit a quantity of terminal device groups in the communication system, a quantity of group member terminal devices included in each terminal device group, and a quantity of group header terminal devices included in each terminal device group.

In the communication system, sidelink information may be transmitted between any two group member terminal devices. For example, a group member terminal device that is in the two group member terminal devices and that is configured to send sidelink information may be referred to as a first terminal device, and a group member terminal device that is configured to receive the sidelink information is referred to as a second terminal device.

For example, the first terminal device and the second terminal device may be any two of the terminal device 1 to the terminal device 3 in FIG. 3. For example, the first terminal device and the second terminal device may be respectively the terminal device 1 and the terminal device 3. For another example, the first terminal device and the second terminal device may be respectively the terminal device 1 and the terminal device 2.

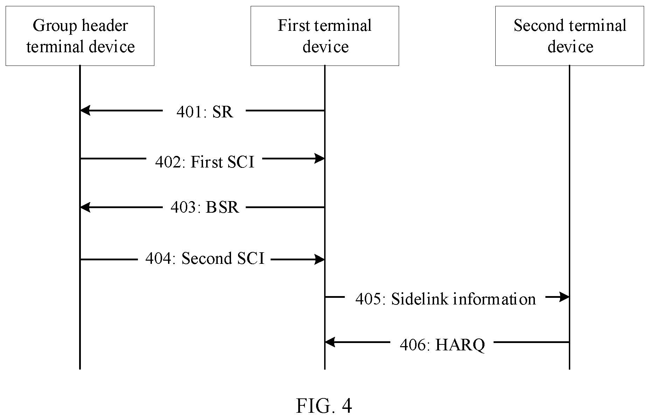

For details of transmitting sidelink information between the first terminal device and the second terminal device, refer to an example of a schematic flowchart of another information transmission method shown in FIG. 4. In this procedure, the first terminal device no longer requests a sidelink resource from a network device, but requests the sidelink resource from a group header terminal device. Specifically:
Step 401: The first terminal device sends an SR to the group header terminal device. Correspondingly, the group header terminal device receives the SR, and determines a first sidelink resource used by the first terminal device to send a B SR.
Step 402: The group header terminal device sends first sidelink control information (sidelink control information, SCI) to the first terminal device. Correspondingly, the first terminal device receives the first SCI, and determines, from the first SCI, the first sidelink resource used to send the BSR.
Step 403: The first terminal device sends the BSR to the group header terminal device, where the BSR indicates a data volume of sidelink information sent by the first terminal device to the second terminal device. Correspondingly, the group header terminal device receives the BSR, and determines, based on the BSR, a second sidelink resource used by the first terminal device to send the sidelink information to the second terminal device.
Step 404: The group header terminal device sends second SCI to the first terminal device. Correspondingly, the first terminal device receives the second SCI, and determines, from the second SCI, the second sidelink resource used to send the sidelink information to the second terminal device.
Step 405: The first terminal device sends the sidelink information to the second terminal device by using the second sidelink resource. Correspondingly, the second terminal device receives the sidelink information by using the second sidelink resource.

The sidelink information includes sidelink control information and/or sidelink data information. That the first terminal device sends the sidelink information to the second terminal device may also be understood as that the first terminal device sends the sidelink control information and/or the sidelink data information to the second terminal device, or may be understood as that the first terminal device sends a PSCCH and/or a PSSCH to the second terminal device. Correspondingly, the second terminal device receives the sidelink control information and/or the sidelink data information from the first terminal device by using the second sidelink resource, or receives the PSCCH and/or the PSSCH from the first terminal device by using the second sidelink resource.

Step 406: The second terminal device sends a HARQ to the first terminal device.

Based on the foregoing two communication systems, the following uses an example to describe specific scenarios to which the embodiments of this application are applicable.

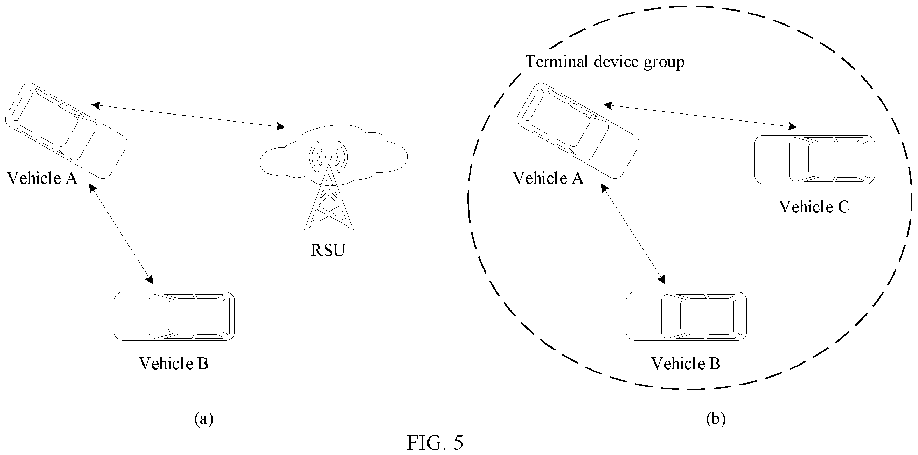

FIG. 5 is a schematic diagram of one group of V2X scenarios. For example, in (a) in FIG. 5, a vehicle A is a first terminal device, and a vehicle B is a second terminal device. The vehicle A requests a sidelink resource from a network device (for example, an RSU), the vehicle A sends sidelink information to the vehicle B based on the requested sidelink resource, and the vehicle B sends a HARQ to the vehicle A in response to the sidelink information of the vehicle A. For example, in (b) in FIG. 5, a vehicle A, a vehicle B, and a vehicle C form a terminal device group, the vehicle A is a first terminal device, the vehicle B is a second terminal device, and the vehicle C is a group header terminal device. The vehicle A requests a sidelink resource from the vehicle C, the vehicle A sends sidelink information to the vehicle B based on the requested sidelink resource, and the vehicle B sends a HARQ to the vehicle A in response to the sidelink information of the vehicle A.

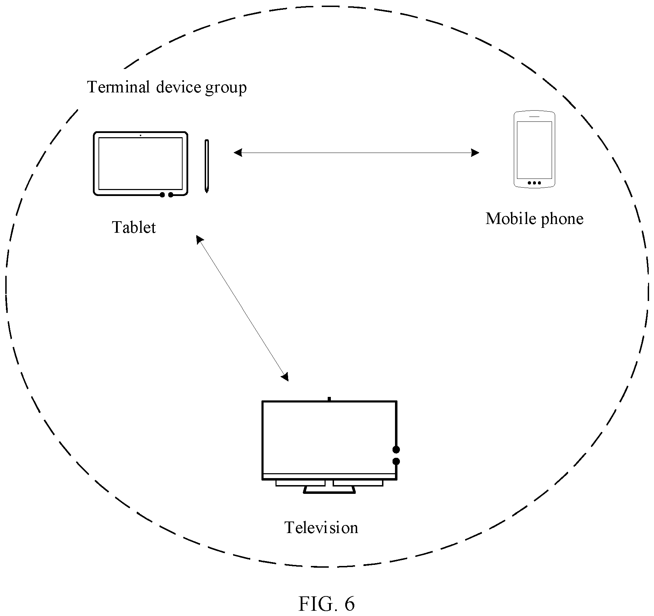

FIG. 6 is a schematic diagram of a home scenario. For example, a user needs to project video data on a tablet to a television. In this scenario, a mobile phone, a television, and a tablet form a terminal device group. The tablet is a first terminal device, the television is a second terminal device, and the mobile phone is a group header terminal device. The tablet requests a sidelink resource from the mobile phone, and sends sidelink information (that is, the video data) to the television based on the sidelink resource. The television sends a HARQ to the tablet in response to the sidelink information of the tablet.

In the foregoing process, the first terminal device sends sidelink information to the second terminal device based on scheduling of the network device or the group header terminal device, and the second terminal device sends a HARQ to the first terminal device in response to the sidelink information. As a data volume of the HARQ is relatively small, when sending the HARQ, the second terminal device may carry the HARQ in a physical sidelink feedback channel (physical sidelink feedback channel, PSFCH).

The PSFCH occupies a sidelink resource requested by the first terminal device. It may also be understood that, when the first terminal device requests the sidelink resource, because a data volume of the HARQ is relatively small, the first terminal device may directly request a sidelink resource including a resource used by the second terminal device to feed back the HARQ, so that the second terminal device feeds back the HARQ.

However, when the second terminal device needs to feed back other information than the HARQ to the first terminal device, if a data volume of the other information is relatively large, the second terminal device further needs to request a sidelink resource from the network device or the group header terminal device. In other words, the second terminal device also needs to first perform step 201 to step 204 or step 401 to step 404. In this scenario, both the first terminal device and the second terminal device need to request the sidelink resources from the network device or the group header terminal device before sending respective sidelink information. This increases duration of an entire interaction process.

In addition, the first terminal device may not only send sidelink control information and/or sidelink data information to the second terminal device, but also send a reference signal to the second terminal device. The reference signal is, for example, a positioning measurement reference signal or a channel state information-reference signal (channel state information-reference signal, CSI-RS). The sidelink control information, the sidelink data information, and the reference signal that are sent by the first terminal device to the second terminal device may be all referred to as a first signal. Correspondingly, the second terminal device may send a second signal to the first terminal device. The second signal may be sidelink control information, sidelink data information, or a reference signal.

Further, a scenario in which the first terminal device and the second terminal device send a signal to each other may be referred to as a link loop (link loop) scenario. The link loop scenario may include two cases:
Case 1: The first signal is related to the second signal. The first terminal device sends the first signal to the second terminal device. The second terminal device may determine the second signal based on the received first signal, and then send the second signal to the first terminal device.

There may be at least the following examples:
Example 1: channel state information measurement scenario.

The first terminal device sends a CSI-RS (that is, the first signal). The second terminal device measures the CSI-RS to obtain channel state information, and sends the channel state information (that is, the second signal) to the first terminal device.

The channel state information indicates a state of a channel between the first terminal device and the second terminal device. The channel state information is, for example, 31 information, and the 31 information specifically includes a PMI, a CQI, and an RI.

In this example, the second terminal device may measure the CSI-RS after detecting the CSI-RS of the first terminal device. In other words, the measurement of the second terminal device is triggered based on the CSI-RS sent by the first terminal device.

In addition, the measurement of the second terminal device may alternatively be triggered based on the sidelink information sent by the first terminal device. After receiving the sidelink information sent by the first terminal device, the second terminal device measures the CSI-RS sent by the first terminal device, to obtain the channel state information. In other words, in the link loop scenario, the first terminal device sends the sidelink information to the second terminal device, and the second terminal device sends the channel state information to the first terminal device. The second terminal device measures the CSI-RS of the first terminal device to obtain the channel state information, and feeds back the channel state information to the first terminal device. Correspondingly, the first terminal device may determine, based on the received channel state information, the state of the channel between the first terminal device and the second terminal device, and determine whether to continue to send the sidelink information, or determine a type of sidelink information to be preferentially sent. Herein, the sidelink information may be specifically sidelink data information, and the sidelink data information is, for example, web page data, video data, or audio data.

It should be noted that, when the first terminal device sends the sidelink information to the second terminal device, and the second terminal device sends the channel state information to the first terminal device, it may be considered that the first signal sent by the first terminal device to the second terminal device is the sidelink information. In this case, the first signal is irrelevant to the second signal. Certainly, it may be further understood that the first signal sent by the first terminal device to the second terminal device is still the CSI-RS. In this case, the first signal is related to the second signal.

Example 2: positioning measurement scenario.

The first terminal device sends a positioning measurement reference signal (that is, the first signal). The second terminal device measures the positioning measurement reference signal sent by the first terminal device to obtain positioning measurement information, and sends the positioning measurement information (that is, the second signal) to the first terminal device. The positioning measurement information is, for example, an RTT, an AoA, and an AoD.

In this example, the second terminal device may measure the positioning measurement reference signal after detecting the positioning measurement reference signal of the first terminal device. In other words, the measurement of the second terminal device is triggered based on the positioning measurement reference signal sent by the first terminal device. In addition, the measurement of the second terminal device may alternatively be triggered based on the sidelink information sent by the first terminal device. After receiving the sidelink information sent by the first terminal device, the second terminal device measures the positioning measurement reference signal sent by the first terminal device to obtain the positioning measurement information. For detailed descriptions, refer to Example 1. Details are not described herein again.

Example 3: assistant information feedback scenario.

The first terminal device sends a resource selection assistant request (that is, the first signal) to the second terminal device. The resource selection assistant request is used to indicate the second terminal device to assist the first terminal device in selecting a sidelink resource from a resource pool. For example, the resource selection assistant request is an indication message used to configure/trigger feedback of the second terminal device. The resource selection assistant request includes a reported time domain type indication, a measurement set indication, a reported content type indication, a measurement threshold, a sending mechanism, and the like. Correspondingly, the second terminal device performs detection in the resource pool based on the reported time domain type indication, the measurement set indication, the reported content type indication, the measurement threshold, the sending mechanism, and the like in the resource selection assistant request, to obtain a sidelink resource that meets a requirement, generates resource selection assistant information (that is, the second signal), and sends the resource selection assistant information to the first terminal device.

In addition, the first signal may alternatively be a zero-power reference signal (zero-power CSI-RS). The zero-power reference signal is used by the second terminal device to measure interference between neighboring groups or inter-systems. Correspondingly, the second terminal device measures the zero-power reference signal to obtain the interference between neighboring groups or inter-systems, to generate the resource selection assistant information (that is, the second signal).

The resource selection assistant information includes one or more of a resource identifier (resource index), RSRP, and an SINR.

Example 4: power control information feedback scenario.

When the first terminal device enters a distributed power control mode, the first terminal device sends a power control assistant request (that is, the first signal) to the second terminal device. In response to the power control assistant request, the second terminal device uses signal power, interference power, or the like as power control assistant information (that is, the second signal) and sends the power control assistant information to the first terminal device.

Case 2: The first signal is irrelevant to the second signal. The first terminal device sends the first signal to the second terminal device. The second terminal device determines the second signal, and then sends the second signal to the first terminal device. There may be at least the following examples:

Example 5: data interaction scenario.

The first terminal device sends sidelink data information (that is, the first signal) to the second terminal device, and the second terminal device sends sidelink data information (that is, the second signal) to the first terminal device.

Example 6: channel state information measurement scenario.

The first terminal device sends sidelink data information (that is, the first signal) to the second terminal device, and the second terminal device measures the CSI-RS to obtain channel state information, and sends the channel state information (that is, the second signal) to the first terminal device. For details, refer to Example 1. Details are not described again.

Example 7: assistant information feedback scenario.

The first terminal device sends a resource selection assistant request (that is, the first signal) to the second terminal device. The resource selection assistant request is used to indicate the second terminal device to assist the first terminal device in selecting a sidelink resource from a resource pool. For example, the resource selection assistant request is a trigger (trigger) indication. Correspondingly, after receiving the resource selection assistant request, the second terminal device performs detection in the resource pool to obtain a sidelink resource that meets a requirement, generates resource selection assistant information (that is, the second signal), and sends the resource selection assistant information to the first terminal device.

It should be noted that in the channel state information measurement scenario, the positioning measurement scenario, the assistant information feedback scenario, and the power control information feedback scenario, the first signal may be irrelevant to the second signal, as shown in Example 6 and Example 7. Certainly, there may be another example in which the first signal is irrelevant to the second signal. Examples are not provided one by one in this application.

Based on this, in the link loop scenario, to reduce a communication delay, this application provides a resource allocation method. The resource allocation method is implemented by a first apparatus, a first terminal device, and a second terminal device.

The resource allocation method may be applied to the architecture in FIG. 1 or FIG. 3. For example, the first apparatus, the first terminal device, and the second terminal device may be respectively the network device, the terminal device 1, and the terminal device 2 in FIG. 1. Alternatively, the first apparatus, the first terminal device, and the second terminal device may be respectively the terminal device 0 (a group header terminal device), the terminal device 1, and the terminal device 2 in FIG. 3.

In a resource allocation process, the first terminal device requests, from the first apparatus, both a resource (referred to as a sending resource or a first resource) on which the first terminal device sends a first signal to the second terminal device and a resource (referred to as a receiving resource or a second resource) on which the first terminal device receives a second signal from the second terminal device.

In other words, the first resource is used by the first terminal device to send the first signal to the second terminal device, and the second resource is used by the first terminal device to receive the second signal from the second terminal device. Further, the first terminal device indicates, to the second terminal device, a resource requested for the second terminal device, so that the second terminal device can send the second signal to the first terminal device without requesting a resource from the first apparatus. This helps reduce a communication delay.

It should be noted in advance that the resource on which the first terminal device receives the second signal from the second terminal device may also be understood as a resource on which the second terminal device sends the second signal to the first terminal device. Similarly, the resource on which the second terminal device receives the first signal from the first terminal device may also be understood as a resource on which the first terminal device sends the first signal to the second terminal device.

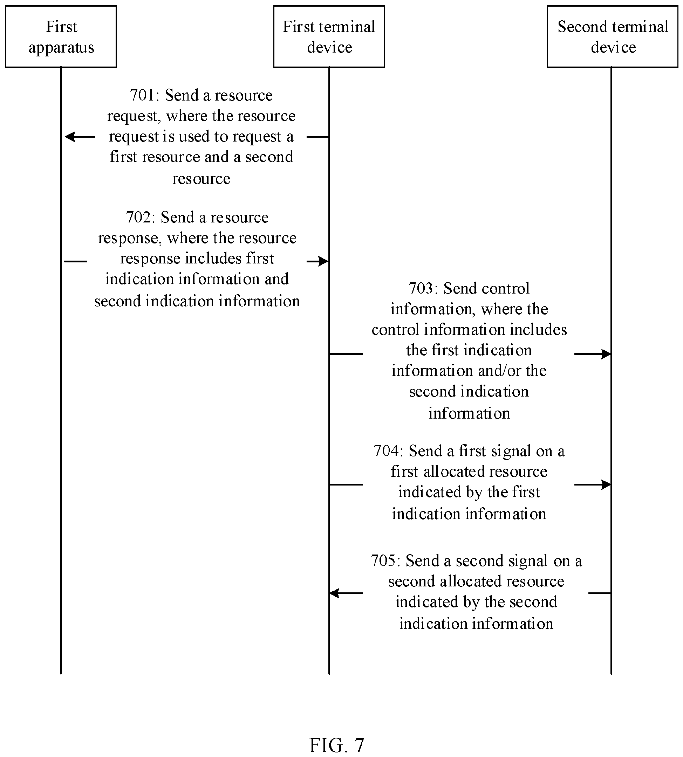

FIG. 7 is an example schematic flowchart of a resource allocation method according to this application. In FIG. 7:
Step 701: A first terminal device sends a resource request to a first apparatus, where the resource request is used to request a first resource and a second resource, the first resource is used by the first terminal device to send a first signal to a second terminal device, and the second resource is used by the second terminal device to send a first signal to the first terminal device.

Optionally, the resource request includes first request information and second request information, the first request information indicates the first resource requested by the first terminal device for the first terminal device, and the second request information indicates the second resource requested by the first terminal device for the second terminal device.

In an optional implementation, the first terminal device may determine the first request information based on the to-be-sent first signal. The first terminal device may determine (or predict) a to-be-received second signal based on the to-be-sent first signal, to determine the second request information based on the second signal.

In an optional implementation, the first terminal device may determine the first request information based on a type of the first signal and/or a data volume of data in the first signal.

For example, the first signal is a reference signal (referred to as a first reference signal), and the first terminal device determines the first request information based on a type of the first reference signal. For example, if the first reference signal is a CSI-RS, the first terminal device may include a type corresponding to the CSI-RS in the first request information, to indicate the first apparatus to allocate, to the first terminal device, a sidelink resource used to send the CSI-RS.

For example, the first signal is specifically sidelink data information (referred to as first data), and the first terminal device determines the first request information based on a data volume of the first data. For example, the data volume of the first data is 100 bits. In this case, the first terminal device may include 100-bit indication information in the first request information, to indicate the first apparatus to allocate, to the first terminal device, a sidelink resource used to send the 1 00-bit data volume.

An implementation in which the first terminal device determines the to-be-received second signal based on the to-be-sent first signal may include at least the following examples: (1) The first signal is a CSI-RS, or the first signal carries the first data, and the first terminal device may determine that the second signal is channel state information. (2) The first signal is a positioning measurement reference signal, or the first signal carries the first data, and the first terminal device may determine that the second signal carries positioning measurement information. (3) The first signal carries a resource selection assistant request, and the first terminal device may determine that the second signal carries resource selection assistant information. (4) The first signal carries a power control assistant request, and the first terminal device may determine that the second signal carries power control assistant information. (5) The first signal is used to trigger the second terminal device to send a positioning measurement reference signal or a CSI-RS to the first terminal device, and the first terminal device may determine that the second signal is a positioning measurement reference signal or a CSI-RS.

In an example, the second signal may be a reference signal (referred to as a second reference signal), and the first terminal device may determine a feedback type of the to-be-received second reference signal based on the to-be-sent first signal. For example, the first signal sent by the first terminal device to the second terminal device is used to trigger the second terminal device to send a positioning measurement reference signal to the first terminal device. In this case, the first terminal device may determine that the feedback type of the second reference signal corresponds to the positioning measurement reference signal.

In an example, the second signal may be sidelink data information (referred to as second data), and the first terminal device may determine a feedback type of the to-be-received second data based on the to-be-sent first signal. For example, if the first signal is a CSI-RS, the first terminal device may determine that the second data is channel state information, and further determine a feedback type corresponding to the channel state information.

In an example, the second signal may be second data, and the first terminal device may determine a data volume of the to-be-received second data based on the to-be-sent first signal. For example, if the first signal is a CSI-RS, the first terminal device may determine that the second data is channel state information, and further determine a data volume corresponding to the channel state information.

Similarly, the first terminal device may determine the second request information based on a feedback type of the second signal and/or a data volume of data in the second signal. For details, refer to an implementation in which the first terminal device determines the first request information based on the type of the first signal and/or the data volume of the data in the first signal.

Further, in this embodiment of this application, based on different fields included in the first request information and/or the second request information, this embodiment of this application may have the following implementation 1 and implementation 2.

### Implementation 1:

The resource request includes first request information and second request information. The first request information includes the data volume of the first data, and the second request information includes the data volume of the second data. The data volume of the first data and the data volume of the second data indicate resource volumes of the first resource and the second resource that are requested by the first terminal device from the first apparatus. For example, both the data volume of the first data and the data volume of the second data may be carried on a data channel.

Further, the first request information may further include a service type of the first data. The service type of the first data may be used to indicate a priority of the first data. When allocating resources to a plurality of terminal devices, the first apparatus may determine, based on a priority of each piece of the data, a resource to be allocated to each terminal device.

For example, the first data is, for example, video data, voice data, or web page data. Correspondingly, the service type of the first data is, for example, a video, a voice, or a web page. Priorities of different service types in descending order are: a video, a voice, and a web page.

For example, the service type of the first data may be carried on a control channel.

The second request information may further include a feedback type of the second data. The second data is, for example, positioning measurement information, channel state information, voice data, and web page data. Correspondingly, the feedback type of the second data is, for example, a positioning information type, a channel state type, voice, and a web page. The feedback type of the second data may alternatively be used to indicate a priority of the second data.

For example, the feedback type of the second data may be carried on a control channel.

In addition, the second request information may further include feedback time information, and the feedback time information indicates a time domain resource and a period resource in the second resource. In a specific implementation, the feedback time information may be a latest time at which the first terminal device expects the second terminal device to feed back the second data, and the first apparatus may determine a corresponding time domain resource and a corresponding period resource based on the feedback time information. For example, the feedback time information may be carried on a control channel.

In addition, the resource request further includes link identification information. The link identification information includes identification information (referred to as first identification information) of the first terminal device and identification information (referred to as second identification information) of the second terminal device, to indicate to the first apparatus that the resource request is used to request a resource to exchange a signal between the first terminal device and the second terminal device. For example, both the first identification information and the second identification information may be carried on a control channel or a data channel.

In addition, to guarantee information security, the first identification information may be further classified into identification information at a physical layer L 1 and identification information at a data link layer L2, and the second identification information may be further classified into identification information at a physical layer L 1 and identification information at a data link layer L2. The identification information of the first terminal device at the physical layer L 1 and the identification information of the second terminal device at the physical layer L 1 (collectively referred to as third identification information) are jointly carried on a control channel, and the identification information of the first terminal device at the data link layer L2 and the identification information of the second terminal device at the data link layer L2 (collectively referred to as fourth identification information) are jointly carried on a data channel.

Identification information of one terminal device is used as an example. The identification information of the terminal device has 24 bits in total. Identification information of 8 bits is carried at the physical layer L 1, and identification information of 16 bits is carried at the data link layer L2. Correspondingly, the first apparatus needs to parse some data from the physical layer L 1 and parse remaining data from the data link layer L2, to obtain the complete identification information.

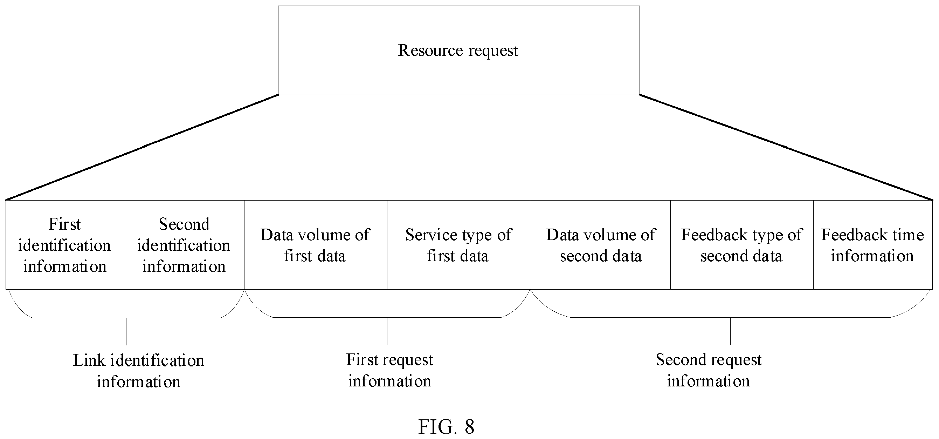

Based on the foregoing descriptions, FIG. 8 is an example schematic diagram of fields included in a resource request according to this application. For example, the first signal is the first data, the second signal is the second data, and the resource request includes the link identification information, the first request information, and the second request information. Further, the link identification information includes the first identification information and the second identification information. The first request information includes the data volume (which may be represented as BSR_Tx) of the first data and the service type (which may be represented as Type_Tx/Priority_Tx) of the first data. The second request information includes the data volume (which may be represented as BSR_Rx) of the second data, the feedback type (which may be represented as Type_Rx) of the second data, and the feedback time information (which may be represented as TimeOffset_Rx).

It should be noted that, although it is recorded in this application that the resource request includes the link identification information, the first request information, and the second request information, it may be understood that the resource request includes one or more of the first identification information, the second identification information, the data volume of the first data, the service type of the first data, the data volume of the second data, the feedback type of the second data, and the feedback time information.

Further, the fields in the resource request may be carried on a control channel or a data channel. In other words, the first terminal device may divide the fields in the resource request into a plurality of pieces of information/messages and send the plurality of pieces of information/messages to the first apparatus, and different messages may be carried on different channels. In an optional manner, the first terminal device may send, to the first apparatus by using a data channel, a data message including the data volume of the first data, the data volume of the second data, and the fourth identification information, and the first terminal device may send, to the first apparatus by using a control channel, a control message including the service type of the first data, the feedback type of the second data, the feedback time information, and the third identification information.

For example, this implementation may be applied to a scenario in which the first terminal device sends the first data to the second terminal device, and the second terminal device feeds back the second data to the first terminal device, that is, is applied to a scenario in which the first terminal device and the second terminal device exchange service data.

For example, in a V2X scenario shown in (a) in FIG. 5, the vehicle A (that is, the first terminal device) and the vehicle B (that is, the second terminal device) perform short-distance data communication. The vehicle A may send a resource request to the network device (that is, the first apparatus). The resource request includes first request information and second request information. The first request information includes a data volume of data sent by the vehicle A to the vehicle B. The second request information includes a data volume of data sent by the vehicle B to the vehicle A. The resource request is used to indicate the network device to allocate a resource used by the vehicle A to send data to the vehicle B and a resource used by the vehicle B to send data to the vehicle A.

It should be noted that in some embodiments, the resource request may include only the data volume of the second data. In other words, the resource request may not include the first request information, or the included first request information does not include the data volume of the first data.

Example 1: The first terminal device sends a CSI-RS (that is, the first reference signal) to the second terminal device, and the second terminal device sends channel state information (that is, the second data) to the first terminal device. The resource request sent by the first terminal device to the first apparatus may include the second request information but does not include the first request information. Further, the second request information includes a data volume of the channel state information and a feedback type of the channel state information. The data volume of the channel state information and the feedback type of the channel state information not only indicate that the first apparatus allocates, to the second terminal device, a resource used to send the channel state information, but also may implicitly indicate to the first apparatus that the second terminal device sends the channel state information in response to the CSI-RS of the first terminal device, that is, may request, from the first apparatus, a resource used by the first terminal device to send the CSI-RS.

Example 2: The first terminal device sends a CSI-RS (that is, the first reference signal) to the second terminal device, and the second terminal device sends channel state information (that is, the second data) to the first terminal device. The resource request sent by the first terminal device to the first apparatus includes the first request information and the second request information. The first request information may include a type of the CSI-RS, and the second request information may include a data volume of the channel state information. The type of the CSI-RS indicates that the first apparatus allocates, to the first terminal device, a resource used to send the CSI-RS, and the data volume of the channel state information indicates that the first apparatus allocates, to the second terminal device, a resource used to send the channel state information.

In some embodiments of this application, the resource request may include only the data volume of the first data. In other words, the resource request may not include the second request information, or the included second request information does not include the data volume of the second data.

Example 3: The first terminal device sends first video data (that is, the first data) to the second terminal device, and the second terminal device sends second video data (that is, the second data) to the first terminal device. The resource request sent by the first terminal device to the first apparatus may include the first request information but does not include the second request information. Further, the first request information includes a data volume of the first video data sent by the first terminal device to the second terminal device. The data volume of the first video data may not only be used to indicate the first apparatus to allocate, to the first terminal device, a resource used to send the first video data, but also may be used to indicate the first apparatus to allocate, to the second terminal device, a resource used to send the second video data. Herein, both the first terminal device and the first apparatus may consider that the data volume of the first video data is the same as the data volume of the second video data.

Example 4: The first terminal device determines to communicate with the second terminal device, and the first terminal device requests a resource pool used for communication between the first terminal device and the second terminal device. The resource request sent by the first terminal device to the first apparatus may include the first request information but does not include the second request information. Further, the first request information includes a corresponding data volume used to request the resource pool or other indication information used to request the resource pool.

The foregoing description is merely an example. The resource request in this application may alternatively be in another manner.

### Implementation 2:

It should be noted in advance that the first apparatus may predetermine n preset resources, and then generate preconfigured information based on the n preset resources. The preconfigured information indicates the n preset resources, and n is a positive integer.

For example, the preconfigured information includes a plurality of pieces of index information, and each piece of index information corresponds to one preset resource. In other words, each piece of index information indicates one preset resource. Table 1 shows one example piece of preconfigured information according to this application. For example, index information 1 indicates a resource 1, and index information 2 indicates a resource 2.

Alternatively, a plurality of preset resources may be implicitly indicated based on locations in the preconfigured information. For example, a resource located at a first location is a resource 1, and a resource located at a second location is a resource 2.

**Table 1**

| Index information | Resource |
|---|---|
| Index information 1 | Resource 1 |
| Index information 2 | Resource 2 |
| Index information 3 | Resource 3 |
| ... | ... |
| Index information n | Resource n |

The first apparatus may send the generated preconfigured information to the first terminal device in advance. Optionally, the first apparatus is a network device, and the network device may send the preconfigured information to the first terminal device by using higher layer signaling (for example, RRC or a MAC CE). Optionally, the first apparatus is a group header terminal device, and the group header terminal device may send the preconfigured information to the first terminal device by using PC5-RRC.

Correspondingly, when generating the resource request, the first terminal device may determine, based on the to-be-sent first signal, index information (referred to as first index information) corresponding to the first resource requested by the first terminal device, and then include the first index information in the first request information, to request a resource corresponding to the first index information from the first apparatus. With reference to the example in Table 1, the first terminal device requests the resource 2 as the first resource. In this case, the index information 2 may be included in the first request information.

In addition, a type (or referred to as a resource type (resource type)) may be further added to the preconfigured information. Specifically, the preconfigured information includes m types, and m is a positive integer. Each type corresponds to at least one piece of index information, and each piece of index information indicates one preset resource. Table 2 shows another example piece of preconfigured information according to this application. For example, a type 1 includes index information 1 to index information 3, and the index information 1 to the index information 3 respectively indicate a resource 1 to a resource 3.

Certainly, in this embodiment, a plurality of preset resources may also be implicitly indicated based on locations in the preconfigured information. For example, resources located at a first location to a third location belong to a type 1, and respectively indicate the resource 1 to the resource 3.

**Table 2**

| Type | Index information | Resource |
|---|---|---|
| Type 1 | Index information 1 | Resource 1 |
| | Index information 2 | Resource 2 |
| | Index information 3 | Resource 3 |
| Type 2 | Index information 1 | Resource 4 |
| | Index information 2 | Resource 5 |
| | Index information 3 | Resource 6 |
| | Index information 4 | Resource 7 |
| Type 3 | Index information 1 | Resource 8 |
| | Index information 2 | Resource 9 |
| | Index information 3 | Resource 10 |
| | Index information 4 | Resource 11 |
| ... | ... | ... |
| Type m | Index information k | Resource n |

A type (referred to as a first type) of the first signal may be one of a plurality of types in the preconfigured information. When generating the resource request, the first terminal device may determine, based on the first type, at least one piece of index information corresponding to the first type, and then determine, from the at least one piece of index information, index information (referred to as first index information) corresponding to the first resource. The first terminal device includes the first type and the first index information in the first request information, to request, from the first apparatus, a resource (that is, the first resource) jointly corresponding to the first type and the first index information.

With reference to the example in Table 2, the first terminal device determines that the first resource used to send the first signal is the resource 2. In this case, the first terminal device sends, to the first apparatus based on the preconfigured information shown in Table 2, the first request information including the type 1 and the index information 2.

In an optional implementation, the first signal is the first reference signal, and the type (that is, the first type) of the first reference signal may be specifically represented by using usage of the first reference signal. For example:
(1) The first reference signal is a CSI-RS, and the first type is a channel state type A, indicating that the first reference signal is used by the first terminal device to request channel state information from the second terminal device.
(2) The first reference signal is a positioning measurement reference signal, and the first type is a positioning information type B, indicating that the first reference signal is used by the first terminal device to request positioning measurement information from the second terminal device.
(3) The first reference signal is a resource selection assistant request, and the first type is an assistant information type C, indicating that the first reference signal is used by the first terminal device to request resource selection assistant information. The resource selection assistant information is obtained by the second terminal device by assisting the first terminal device in selecting a sidelink resource from a resource pool.
(4) The first reference signal is a power control assistant request, and the first type is a power control type D, indicating that the first reference signal is used by the first terminal device to request power control assistant information such as signal power and interference power of the second terminal device.

In another optional implementation, the first signal is the first data, and the type of the first data may be specifically a service type. For example, (5) the first data is video data, and the type of the first data is a video. (6) The first data is picture data, and the type of the first data is a picture. (7) The first data is web page data, and the type of the first data is a web page.

In this application, the second request information may alternatively include second index information, or include a feedback type of the second signal and second index information. The second index information, or the feedback type of the second signal and the second index information are used to indicate the first apparatus to allocate, to the second terminal device, the second resource used to send the second signal.

The feedback type of the second signal may be associated with the first type. For example, when the first type is a channel state type A, the feedback type of the second data is a channel state type a. When the first type is a positioning information type B, the feedback type of the second data is a positioning information type b. When the first type is an assistant information type C, the feedback type of the second data is an assistant information type c. When the first type is a power control type D, the feedback type of the second data is a power control type d.

It should be noted that when the feedback type of the second signal is associated with the first type, the feedback type of the second data may be the same as the first type. This is explained as follows: The first type and the feedback type of the second data both are channel state (31) types, positioning information (positioning information) types, assistant information (assistant information) types, or power control (power control) types.

The feedback type of the second signal may not be associated with the first type. For example, the type of the first data is a picture, and the feedback type of the second data is a web page. For another example, the type of the first data is a video, and the feedback type of the second data is channel state information.

For example, the first terminal device may add the first index information or the first type and the first index information to a control channel. The first terminal device may alternatively add the second index information or the feedback type of the second signal and the second index information to a control channel.

In addition, this application provides another implementation. The second request information includes feedback information of the second signal. The feedback information of the second signal includes a feedback type of the second signal and a feedback element corresponding to the feedback type. The feedback type of the second signal may be related to or irrelevant to the first type. For details, refer to the foregoing descriptions.

Different feedback types correspond to different feedback elements. For example, a feedback element corresponding to the channel state type is one or more of a CQI, an RI, and a PMI. A feedback element corresponding to the positioning information type is, for example, one or more of an RTT, an AoA, and an AoD. A feedback element corresponding to the assistant information type is, for example, one or more of a resource identifier, RSRP, and an SINR. A feedback element corresponding to the power control type is, for example, signal power and/or interference power

In this implementation, the second signal may be specifically second data, and a feedback type of the second data in the second request information and a feedback element corresponding to the feedback type may indicate a data volume of the second data. For example, the second data is channel state information. Correspondingly, the feedback type of the second data is a channel state type, and the feedback element corresponding to the feedback type is one or more of a CQI, an RI, and a PMI. Further, the second request information includes a channel state type and a feedback element CQI corresponding to the channel state type. If it is agreed that the second terminal device feeds back a full band to the first terminal device, the first apparatus may determine that the data volume of the second data is approximately 5 bits. If it is agreed that the second terminal device feeds back k subbands to the first terminal device, where k is a positive integer, the first apparatus may determine that the data volume of the second data is approximately 5×k bits.

In this manner, the first apparatus may determine the data volume of the second data based on the feedback type of the second data and the feedback element corresponding to the feedback type, to allocate a resource to the second terminal device, thereby helping improve accuracy of resource allocation and reducing complexity of preconfiguration performed by the first apparatus.

In this implementation, the second request information may further include feedback time information, and/or the resource request may further include link identification information. For details, refer to descriptions in the foregoing implementation 1. Details are not described herein again.

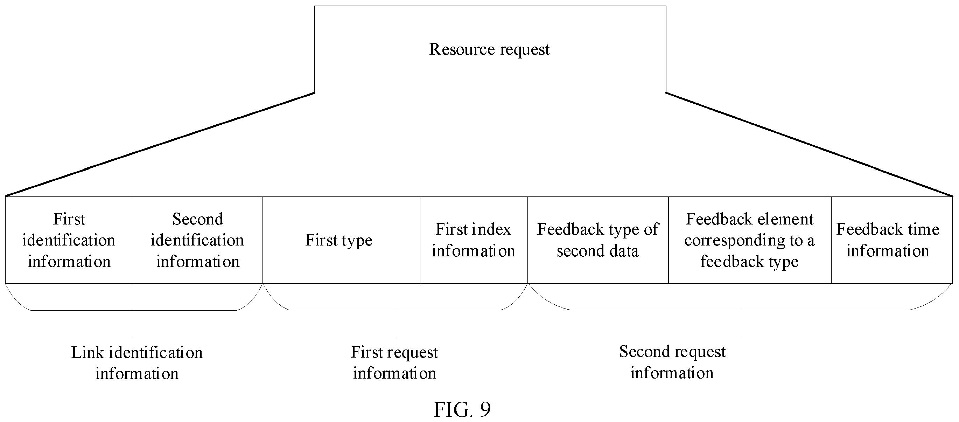

Based on the foregoing descriptions, FIG. 9 is an example schematic diagram of fields included in another resource request according to this application. For example, the first signal is the first reference signal, the second signal is the second data, and the resource request includes the link identification information, the first request information, and the second request information. Further, the link identification information includes the first identification information and the second identification information, and the first request information includes the first type (which may be represented as Resource Type) and the first index information, and the second request information includes the feedback type of the second data, the feedback element corresponding to the feedback type, and the feedback time information (which may be represented as TimeOffset_Rx). The feedback type of the second data and the feedback element corresponding to the feedback type indicate the data volume (Resource Quantity) of the second data.

It should be noted that, although it is recorded in this application that the resource request includes the link identification information, the first request information, and the second request information, it may be understood that the resource request includes one or more of the first identification information, the second identification information, the first type, the first index information, the feedback type of the second data, the feedback element corresponding to the feedback type, and the feedback time information.

It should be further noted that, when the feedback type of the second signal is associated with the first type, for example, both the first type and the feedback type of the second data are channel state types, positioning information types, assistant information types, or power control types, the feedback type of the second signal in the second request information may reuse the first type in the first request information. In other words, the resource request includes one or more of the first identification information, the second identification information, the first type, the first index information, the feedback element corresponding to the feedback type (that is, the first type), and the feedback time information. The first type is not only used to indicate the type of the first signal, but also used to indicate the feedback type of the second data. Based on this, signaling overheads can be reduced while indication information is effectively transmitted.

Further, the fields in the resource request may be carried on a control channel or a data channel. In other words, the first terminal device may divide the fields in the resource request into a plurality of pieces of information/messages and send the plurality of pieces of information/messages to the first apparatus, and different messages may be carried on different channels. In an optional manner, the first terminal device may send, to the first apparatus by using a data channel, a data message including the fourth identification information, and the first terminal device may send, to the first apparatus by using a control channel, a control message including the first type, the first index information, the feedback type of the second data, the feedback element corresponding to the feedback type, the feedback time information, and the third identification information.

For example, this implementation is applicable to a scenario in which the first terminal device sends the first reference signal to the second terminal device, and the second terminal device feeds back the second data to the first terminal device.

For example, in the home scenario in FIG. 6, the tablet (that is, the first terminal device) and the television (that is, the second terminal device) perform short-distance data communication. Before the tablet transmits video data to the television, the tablet needs to first obtain state information of a channel between the tablet and the television. Specifically, the tablet sends a resource request to the mobile phone (that is, the first apparatus). The resource request includes first request information and second request information. The first request information includes a type (that is, the first type) of a CSI-RS and first index information corresponding to the type. The second request information includes a channel state type and a feedback element CQI corresponding to the channel state type. The resource request is used to indicate the mobile phone to allocate a resource used by the tablet to send the CSI-RS to the television and a resource used by the television to send the channel state information to the tablet.

For example, this implementation may be further applicable to a scenario in which the first terminal device sends the first data to the second terminal device, and the second terminal device feeds back the second data to the first terminal device.

For example, in the V2X scenario shown in (a) in FIG. 5, the vehicle A (that is, the first terminal device) and the vehicle B (that is, the second terminal device) perform short-distance data communication. The vehicle A may send a resource request to the network device (that is, the first apparatus). The resource request includes first request information and second request information. The first request information includes a service type of data sent by the vehicle A to the vehicle B and first index information corresponding to the service type. The second request information includes a channel state type and a feedback element CQI corresponding to the channel state type. The resource request is used to indicate the network device to allocate a resource used by the vehicle A to send data to the vehicle B and a resource used by the vehicle B to send channel state information to the vehicle A.

It should be noted that in some embodiments, there may be a case in which the resource request includes only the first request information but does not include the second request information, or the resource request includes only the second request information but does not include the first request information. In this case, the first apparatus and the first terminal device may pre-determine a correspondence, to infer unknown information in the resource request based on known information in the resource request.

For example, the first apparatus and the first terminal device agree in advance on a correspondence between the first type, the feedback type of the second data, and the feedback element. For example, both the first type and the feedback type of the second data are channel state types, and the feedback element corresponding to the channel state type is a CQI. In this case, the resource request may include only the first request information and does not include the second request information. The first type included in the first request information is the channel state type, and the first request information may indicate that the feedback type and the feedback element of the second data are respectively the channel state type and the CQI.

Step 702: The first apparatus sends a resource response to the first terminal device, where the resource response includes first indication information and second indication information, the first indication information indicates a first allocated resource, and the second indication information indicates a second allocated resource.

Herein, the first apparatus needs to allocate resources to the first terminal device and the second terminal device based on a current resource allocation status. In this case, the resources allocated by the first apparatus to the first terminal device and the second terminal device may be different from the first resource and the second resource that are requested by the first terminal device. To distinguish the first resource and the second resource, in the following, a resource that is allocated by the first apparatus to the first terminal device and that is used to send the first signal may be referred to as the first allocated resource, and a resource that is allocated by the first apparatus to the second terminal device and that is used to send the second signal may be referred to the second allocated resource. The first resource and the first allocated resource may be the same or different, and the second resource and the second allocated resource may be the same or different.

First, an implementation in which the first apparatus determines the first allocated resource and the second allocated resource is described as follows:

Optionally, the first apparatus determines that the resource request includes the link identification information, that is, the first apparatus determines that the resource request includes the first identification information and the second identification information. In this case, it may be determined that the resource request sent by the first terminal device is used to request the first resource for the first terminal device and request the second resource for the second terminal device. Correspondingly, the first apparatus determines the first allocated resource and the second allocated resource respectively based on the first request information and the second request information in the resource request.

In an optional implementation, the resource request further includes one or more of the data volume of the first data, the service type of the first data, the data volume of the second data, the feedback type of the second data, and the feedback time information. Correspondingly, the first apparatus determines, based on the data volume of the first data, the resource volume required by the first terminal device to send the first data, determines, based on the data volume of the second data, the resource volume required by the second terminal device to send the second data, and then determines the first allocated resource and the second allocated resource based on a resource volume required by the first data and a resource volume required by the second data and with reference to factors such as the service type of the first data, the feedback type of the second data, the feedback time information, the current resource allocation status, and channel quality.

Specifically, when the first apparatus determines the first resource, if the first apparatus determines that a current resource is relatively insufficient, the first apparatus determines, based on the service type of the first data, whether to allocate a resource to the first terminal device, or determines, based on the service type of the first data, a resource volume of a resource allocated to the first terminal device. For example, when the first apparatus receives resource requests from a plurality of terminal devices, for example, receives a resource request 1 from a terminal device 1, and receives a resource request 2 from a terminal device 2, where a service type of first data in the resource request 1 is a video, and a service type of first data in the resource request 2 is a web page, if the first apparatus determines that a current resource is relatively insufficient, the first apparatus may preferentially allocate a resource to the terminal device 1, and then allocate a resource to the terminal device 2.

For an implementation in which the first apparatus determines the second allocated resource, refer to the foregoing implementation in which the first allocated resource is determined. Further, the first apparatus may determine a time domain resource and a period resource in the second allocated resource based on the feedback time information. For example, the second request information includes the feedback time information (TimeOffset_Rx), and the first apparatus may use TimeOffset_Rx as a feedback time of the second signal, or select, from TimeOffset_Rx, an earliest time that meets a time sequence requirement. If CSI-RS measurement or assistant information is periodically configured/triggered, the first apparatus may further indicate a period resource of the second allocated resource based on this.

In another optional implementation, the resource request further includes one or more of the first type, the first index information, the feedback type of the second data, the feedback element corresponding to the feedback type, and the feedback time information. Correspondingly, the first apparatus determines, based on the first index information or the first index information and the first type in the resource request, the first resource requested by the first terminal device, determines, based on the feedback type of the second data and the feedback element corresponding to the feedback type in the resource request, a resource volume of the second resource requested by the first terminal device, and then determines the first allocated resource and the second allocated resource based on resource volumes of the first resource and the second resource that are requested by the first terminal device and with reference to factors such as the first type, the feedback type of the second data, the feedback time information, and the current resource allocation status, and channel quality.

Specifically, when the first apparatus determines the first allocated resource, in an example, the first apparatus determines, from the preconfigured information based on the first index information in the resource request, the first resource requested by the first terminal device. For example, in Table 1, the resource request includes the index information 2. In this case, the first apparatus may determine, from the preconfigured information, that the first resource requested by the first terminal device is the resource 2, and after determining that the resource 2 has not been allocated to another terminal device, allocate the resource 2 to the first terminal device, that is, use the resource 2 as the first allocated resource.

In an example, the first apparatus determines, from the preconfigured information based on the first index information and the first type in the resource request, the first resource requested by the first terminal device. For example, in Table 2, the resource request includes the type 1 and the index information 2. In this case, the first apparatus may determine, from the preconfigured information, that the first resource requested by the first terminal device is the resource 2, and after determining that the resource 2 has not been allocated to another terminal device, allocate the resource 2 to the first terminal device, that is, use the resource 2 as the first allocated resource.

In addition, if a resource requested by another terminal device (referred to as a third terminal device) conflicts with the resource requested by the first terminal device, the first apparatus may determine, based on the first type and a type of a first signal in a resource request sent by the third terminal device, or based on a terminal priority of the first terminal device and a terminal priority of the third terminal device, how to allocate resources to the first terminal device and the third terminal device.

If the first apparatus determines that the first resource currently requested by the first terminal device is occupied by another terminal device, the first apparatus may select, by itself, a resource similar to the first resource requested by the first terminal device as the first allocated resource, and allocate the first allocated resource to the first terminal device. Alternatively, the first apparatus feeds back a request failure response to the first terminal device, so that the first terminal device determines new first index information, or a new first type and new first index information, and sends a new resource request to the first apparatus.

When determining the second resource, the first apparatus may predict a data volume of the second data based on the feedback type of the second data and the feedback element corresponding to the feedback type, further, determine, based on the data volume of the second data, a resource volume required by the second data, and then determine the second allocated resource based on the resource volume required by the second data. For details of a manner in which the first apparatus determines the second allocated resource based on the resource volume required by the second data, refer to the descriptions in the foregoing implementation 1.

After determining the first allocated resource and the second allocated resource, the first apparatus generates a resource response based on the first allocated resource and the second allocated resource. The resource response includes the first indication information and the second indication information, the first indication information indicates the first allocated resource, and the second indication information indicates the second allocated resource. Correspondingly, the first terminal device obtains the first indication information and the second indication information from the resource response.

In this application, the first apparatus may add both the first indication information and the second indication information to a control channel sent to the first terminal device. Optionally, the first apparatus may send the first indication information and the second indication information to the first terminal device as one message, or send the first indication information and the second indication information to the first terminal device as two messages.

The resource response may further include the link identification information (including the first identification information and the second identification information) obtained from the resource request. The link identification information indicates that the two resources indicated by the resource response are respectively the first allocated resource used by the first terminal device to send the first signal and the second allocated resource used by the second terminal device to send the second signal.

Correspondingly, the first terminal device obtains the link identification information from the resource response, and determines that the first indication information and the second indication information in the resource response are respectively used to indicate the first allocated resource and the second allocated resource.

In this application, when the first apparatus sends the resource response to the first terminal device, the resource response may be received by another terminal device. In this case, the another terminal device may avoid the first allocated resource and the second allocated resource based on the first indication information and the second indication information in the resource response, so that the another terminal device does not contend for a resource with the first terminal device and/or the second terminal device, to guarantee transmission accuracy in an entire interaction process.

This application may further have the following implementations. Implementation 1: The first apparatus directly sends the second indication information to the second terminal device, so that the first terminal device does not need to send, to the second terminal device, the second indication information obtained from the resource response. Implementation 2: The first apparatus sends the resource response (including the first indication information and the second indication information) to the first terminal device and the second terminal device, so that the first terminal device does not need to send, to the second terminal device, the first indication information and/or the second indication information that are/is obtained from the resource response.

The following explains and describes the foregoing resource allocation method with reference to a specific scenario. The first apparatus in a scenario a is a group header terminal device, and the first apparatus in a scenario b is a network device.

### Scenario a:

The first terminal device, the second terminal device, and the group header terminal device may form a terminal device group, or do not form a terminal device group. Before the first terminal device exchanges a signal with the second terminal device, the first terminal device may request a first resource and a second resource from the group header terminal device. Details are as the following step 701-a and step 702-a.

701-a: The first terminal device sends a resource request to the group header terminal device.

Optionally, the first terminal device communicates with the group header terminal device by using a sidelink.

Example (1): The resource request includes a data volume of first data, a service type of the first data, a data volume of second data, a feedback type of the second data, feedback time information, and link identification information.

The data volume of the first data, the data volume of the second data, and fourth identification information may be carried on a PSSCH sent by the first terminal device to the group header terminal device. The service type of the first data, the feedback type of the second data, the feedback time information, and the third identification information may be carried on a PSCCH sent by the first terminal device to the group header terminal device, and may be specifically carried in newly defined 2nd-stage SCI 2.

A format of the newly defined 2nd-stage SCI 2 may be indicated by 1st-stage SCI 1. Specifically, format indication information (2nd-stage SCI format) in the 1st-stage SCI 1 indicates a new format of the 2nd-stage SCI 2. For example, the new format is referred to as a format 1. When the group header terminal device determines that the received 2nd-stage SCI 2 indicated by the 1st-stage SCI 1 is in the format 1, the group header terminal device may parse the received 2nd-stage SCI 2 based on the format 1. The format indication information in the original 1st-stage SCI 1 indicates the format of the newly defined 2nd-stage SCI 2, and the newly defined 2nd-stage SCI 2 may inherit content in the original 1 st-stage SCI 1.

In addition, alternatively, the data volume of the first data, the data volume of the second data, and the fourth identification information may be carried on a PSCCH sent by the first terminal device to the group header terminal device.

Alternatively, some fields in the data volume of the first data, the data volume of the second data, and the fourth identification information are carried on a PSSCH sent by the first terminal device to the group header terminal device, and the other fields are carried on a PSCCH sent by the first terminal device to the group header terminal device.

Alternatively, the service type of the first data, the feedback type of the second data, the feedback time information, and the third identification information are carried on a PSSCH sent by the first terminal device to the group header terminal device.

Alternatively, some fields in the service type of the first data, the feedback type of the second data, the feedback time information, and the third identification information are carried on a PSSCH sent by the first terminal device to the group header terminal device, and the other fields are carried on a PSCCH sent by the first terminal device to the group header terminal device.

Example (2): The resource request includes first index information, a first type, a feedback type of second data, a feedback element corresponding to the feedback type, feedback time information, and link identification information.

In an optional implementation of this example, the first index information, the first type, the feedback type of the second data, the feedback element corresponding to the feedback type, the feedback time information, and the link identification information may be carried on a PSCCH sent by the first terminal device to the group header terminal device, and may be specifically carried in newly defined lightweight SCI. The lightweight SCI further includes format indication information, and the format indication information may indicate that a format of the SCI is a new format. For example, the new format is referred to as a format 2. When receiving the SCI, the group header terminal device parses the SCI to obtain that the format indication information in the SCI is the format 2, and the group header terminal device parses the SCI based on the format 2. Signaling load exchanged between the first terminal and the group header terminal device may be reduced in the resource request by using the newly defined lightweight SCI.

In another optional implementation of this example, the fourth identification information may be carried on a PSSCH sent by the first terminal device to the group header terminal device. The first index information, the first type, the feedback type of the second data, the feedback element corresponding to the feedback type, the feedback time information, and the third identification information may be carried on a PSCCH sent by the first terminal device to the group header terminal device, and may be specifically carried in newly defined 2nd-stage SCI 2.

A format of the newly defined 2nd-stage SCI 2 may be indicated by 1 st-stage SCI 1. Specifically, format indication information in the 1 st-stage SCI 1 indicates a new format of the 2nd-stage SCI 2. For example, the new format is referred to as a format 3. When the group header terminal device determines that the received 2nd-stage SCI 2 indicated by the 1st-stage SCI 1 is in the format 3, the group header terminal device may parse the received 2nd-stage SCI 2 based on the format 3. The format indication information in the original 1st-stage SCI 1 indicates the format of the newly defined 2nd-stage SCI 2, and the newly defined 2nd-stage SCI 2 may inherit content in the original 1st-stage SCI 1.

In addition, alternatively, the fourth identification information may be carried on a PSCCH sent by the first terminal device to the group header terminal device.

Alternatively, the first index information, the first type, the feedback type of the second data, the feedback element, the feedback time information, and the third identification information are carried on a PSSCH sent by the first terminal device to the group header terminal device.

Alternatively, some fields in the first index information, the first type, the feedback type of the second data, the feedback element, the feedback time information, and the third identification information are carried on a PSSCH sent by the first terminal device to the group header terminal device, and the other fields are carried on a PSCCH sent by the first terminal device to the group header terminal device.

702-a: The group header terminal device sends a resource response to the first terminal device.

The group header terminal device determines the first allocated resource and the second allocated resource based on the resource request, and then generates the resource response based on the first allocated resource and the second allocated resource. The resource response includes the first indication information, the second indication information, and the link identification information.

The fourth identification information may be carried on a PSSCH sent by the group header terminal device to the first terminal device. The first indication information, the second indication information, and the third identification information may be carried on a PSCCH sent by the group header terminal device to the first terminal device, and may be specifically carried in newly defined 2nd-stage SCI 2.

A format of the newly defined 2nd-stage SCI 2 may be indicated by 1st-stage SCI 1. Specifically, format indication information in the 1st-stage SCI 1 indicates a new format of the 2nd-stage SCI 2. For example, the new format is referred to as a format 4. When the first terminal device determines that the received 2nd-stage SCI 2 indicated by the 1st-stage SCI 1 is in the format 4, the first terminal device may parse the received 2nd-stage SCI 2 based on the format 4.

In addition, alternatively, the fourth identification information may be carried on a PSCCH sent by the group header terminal device to the first terminal device.

Alternatively, the first indication information, the second indication information, and the third identification information are carried on a PSSCH sent by the group header terminal device to the first terminal device.

Alternatively, some fields in the first indication information, the second indication information, and the third identification information are carried on a PSSCH sent by the group header terminal device to the first terminal device, and the other fields are carried on a PSCCH sent by the group header terminal device to the first terminal device.

### Scenario b:

The first terminal device and the second terminal device are in a serving cell of the network device. Before the first terminal device exchanges a signal with the second terminal device, the first terminal device may request the first resource and the second resource from the network device. Details are as the following step 701-b and step 702-b.

Step 701-b: The first terminal device sends a resource request to the network device.

Example (a): The resource request includes a data volume of first data, a service type of the first data, a data volume of second data, a feedback type of the second data, feedback time information, and link identification information.

The data volume of the first data, the data volume of the second data, and the fourth identification information may be carried on a physical uplink shared channel (physical uplink shared channel, PUSCH) sent by the first terminal device to the network device. The service type of the first data, the feedback type of the second data, the feedback time information, and the third identification information may be carried on a physical uplink control channel (physical uplink control channel, PUCCH) sent by the first terminal device to the network device, and may be specifically carried in newly defined uplink control information (uplink control information, UCI).

The format indication information in the UCI may be used to indicate whether the UCI uses a new format. For example, the new format is referred to as a format 5. When receiving the UCI, the network device parses the format indication information in the UCI, and determines that the current UCI uses the format 5. In this case, the network device may parse the current UCI based on the format 5.

In addition, alternatively, the data volume of the first data, the data volume of the second data, and the fourth identification information may be carried on a PUCCH sent by the first terminal device to the network device.

Alternatively, some fields in the data volume of the first data, the data volume of the second data, and the fourth identification information are carried on a PUSCH sent by the first terminal device to the network device, and the other fields are carried on a PUCCH sent by the first terminal device to the network device.

Alternatively, the service type of the first data, the feedback type of the second data, the feedback time information, and the third identification information are carried on a PUSCH sent by the first terminal device to the network device.

Alternatively, some fields in the service type of the first data, the feedback type of the second data, the feedback time information, and the third identification information are carried on a PUSCH sent by the first terminal device to the network device, and the other fields are carried on a PUCCH sent by the first terminal device to the network device.

Example (b): The resource request includes first index information, a first type, a feedback type of second data, a feedback element corresponding to the feedback type, feedback time information, and link identification information.

In an optional implementation of this example, the first index information, the first type, the feedback type of the second data, the feedback element corresponding to the feedback type, the feedback time information, and the link identification information may be carried on a PUCCH sent by the first terminal device to the network device, and may be specifically carried in newly defined lightweight UCI. The lightweight UCI further includes format indication information, and the format indication information may indicate that a format of the UCI is a new format. For example, the new format is referred to as a format 6. When receiving the UCI, the network device parses the UCI to obtain that the format indication information in the UCI is the format 6. In this case, the network device may parse the UCI based on the format 6. Signaling load exchanged between the first terminal and the network device may be reduced in the resource request by using the newly defined lightweight UCI.

In another optional implementation of this example, the fourth identification information may be carried on a PUSCH sent by the first terminal device to the network device. The first index information, the first type, the feedback type of the second data, the feedback element corresponding to the feedback type, the feedback time information, and the third identification information may be carried on a PUCCH sent by the first terminal device to the network device, and may be specifically carried in newly defined UCI.

The newly defined UCI may be obtained by newly adding the first index information, the first type, the feedback type of the second data, the feedback element corresponding to the feedback type, the feedback time information, and the third identification information to the existing UCI. The format indication information in the UCI indicates whether the UCI uses a new format. For example, the new format is referred to as a format 7. When receiving the UCI, the network device parses the format indication information, and determines that the current UCI uses the format 7. In this case, the network device may parse the current UCI based on the format 7.

In addition, alternatively, the fourth identification information may be carried on a PUCCH sent by the first terminal device to the network device.

Alternatively, the first index information, the first type, the feedback type of the second data, the feedback element corresponding to the feedback type, the feedback time information, and the third identification information are carried on a PUSCH sent by the first terminal device to the network device.

Alternatively, some fields in the first index information, the first type, the feedback type of the second data, the feedback element corresponding to the feedback type, the feedback time information, and the third identification information are carried on a PUSCH sent by the first terminal device to the network device, and the other fields are carried on a PUCCH sent by the first terminal device to the network device.

Step 702-b: The network device sends a resource response to the first terminal device.

The network device determines the first allocated resource and the second allocated resource based on the resource request, and then generates the resource response based on the first allocated resource and the second allocated resource. The resource response includes the first indication information, the second indication information, and the link identification information.

The fourth identification information may be carried on a physical downlink shared channel (physical downlink shared channel, PDSCH) sent by the network device to the first terminal device. The first indication information, the second indication information, and the third identification information may be carried on a physical downlink control channel (physical downlink control channel, PDCCH) sent by the network device to the first terminal device, and may be specifically carried in newly defined DCI.

The format indication information in the DCI may be used to indicate whether the DCI uses a new format. For example, the new format is referred to as a format 8. When receiving the DCI, the first terminal device parses the format indication information in the DCI, and determines that the current DCI uses the format 8. In this case, the first terminal device may parse the current DCI based on the format 8.

In addition, alternatively, the fourth identification information may be carried on a PDCCH sent by the network device to the first terminal device.

Alternatively, the first indication information, the second indication information, and the third identification information are carried on a PDSCH sent by the network device to the first terminal device.

Alternatively, some fields in the first indication information, the second indication information, and the third identification information are carried on a PDSCH sent by the network device to the first terminal device, and the other fields are carried on a PDCCH sent by the network device to the first terminal device.

The resource allocation method in the embodiments of this application is described in detail in step 701 and step 702 (including step 701-a, step 702-a, step 701-b, and step 702-b), so that the first terminal device may obtain the first indication information and/or the second indication information from the resource response, further, send the first signal to the second terminal device based on the first indication information, and receive the second signal from the second terminal device based on the second indication information.

The following specifically describes a specific implementation in which the first terminal device exchanges a signal with the second terminal device after the first terminal device obtains the resource response. Continue to refer to step 703 to step 705 shown in FIG. 7.

Step 703: The first terminal device sends control information to the second terminal device, where the control information includes the first indication information and/or the second indication information.

In an optional implementation, the first terminal device generates the control information based on the resource response, and sends the control information to the second terminal device. The control information may include the second indication information, and the control information is used to indicate the second terminal device to send the second signal to the first terminal device on the second allocated resource. In addition, the control information may further include the first indication information, and the control information is further used to indicate the second terminal device to receive the second signal from the first terminal device on the first allocated resource.

In this application, the first terminal device may add both the first indication information and the second indication information to a control channel sent to the second terminal device. Optionally, the first terminal device may send the first indication information and the second indication information to the second terminal device as one message, or send the first indication information and the second indication information to the second terminal device as two messages.

Optionally, the control information may further include a preset feedback type, and the preset feedback type is used to indicate the second terminal device to send a second signal corresponding to the preset feedback type to the first terminal device. For example, in the foregoing CSI measurement scenario, the control information may further include a preset feedback type, and the preset feedback type is, for example, a channel state type. Correspondingly, the second terminal device may measure the CSI-RS (that is, the first signal) to obtain the channel state information (that is, the second signal). Further, the control information may further include a preset feedback element corresponding to the preset feedback type. The preset feedback element corresponding to the preset feedback type is, for example, a CQI corresponding to the channel state type. The second terminal device may measure the CSI-RS (that is, the first signal) to obtain the CQI (that is, the second signal).

Step 704: The first terminal device sends the first signal to the second terminal device on the first allocated resource indicated by the first indication information.

Specifically, the first terminal device determines the first allocated resource based on the first indication information, and then sends the first signal to the second terminal device on the first allocated resource. Correspondingly, the second terminal device determines the first allocated resource based on the first indication information, and then receives the first signal from the first terminal device on the first allocated resource.

Step 705: The second terminal device sends the second signal to the first terminal device on the second allocated resource indicated by the second indication information.

Specifically, the second terminal device determines the second allocated resource based on the second indication information, and then sends the second signal to the first terminal device on the second allocated resource. Correspondingly, the first terminal device determines the second allocated resource based on the second indication information, and then receives the second signal from the second terminal device on the second allocated resource.

In this step, the first terminal device may determine the second allocated resource based on the second indication information, that is, determine a resource on which the second terminal device sends the second signal. The first terminal device does not need to blindly detect the second signal, but directly receives the second signal from the second terminal device on the second allocated resource, thereby helping reduce power consumption of the first terminal device.

In an optional implementation, the second terminal device may determine, based on the first signal, the second signal sent to the first terminal device, that is, the second signal is associated with the first signal. For example, the second terminal device may send, to the first terminal device based on the preset feedback type in the control information, the second signal corresponding to the preset feedback type.

It should be noted that, in another optional manner of this application, the first indication information may indicate M resources, and the first terminal device may send the first signal to the second terminal device for M times based on the first indication information. M is a positive integer. Similarly, the second indication information may indicate N resources, and the second terminal device may send the second signal to the first terminal device for N times based on the second indication information. N is a positive integer, and M may be equal to or not equal to N.

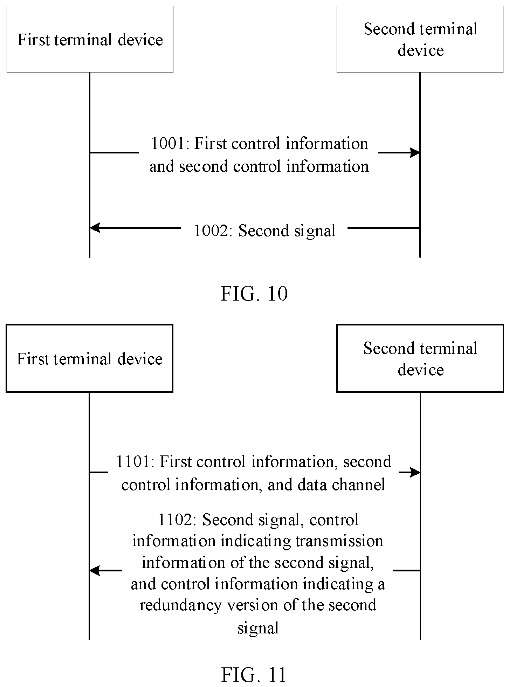

FIG. 10 is a schematic flowchart of exchanging a signal between a first terminal device and a second terminal device according to this application.

Step 1001: The first terminal device sends first control information and second control information to the second terminal device.

The first control information may include at least one of a first field or a second field, the at least one of the first field or the second field indicates a format of the first control information, and the at least one of the first field or the second field indicates a format of the second control information.

For example, the first control information may include both a first field and a second field, and the first field and the second field are used to jointly indicate the format of the first control information and the format of the second control information. For example, the first field indicates the format of the first control information, and the second field indicates the format of the second control information; or the first field indicates the format of the second control information, and the second field indicates the format of the first control information.

For example, the first control information may include only the first field, or the first control information may include only the second field, and the first field (or the second field) alone indicates the format of the first control information and the format of the second control information.

The format of the first control information includes at least a first format a and a second format a. The first format a indicates a time-frequency resource (equivalent to the second allocated resource) on which the second terminal device feeds back the second signal, and the second format a indicates transmission information used when the first terminal device sends a data channel.

Optionally, the first control information may be SCI. In an existing standard protocol, a format of the SCI includes 1st-stage SCI 1 and 2nd-stage SCI 2. The SCI 1 includes SCI 1-A, and the SCI 2 includes SCI 2-A and SCI 2-B. For fields included in the SCI 1-A and definitions of the fields, refer to Table 3. For fields included in the SCI 2-A and definitions of the fields, refer to Table 4. For example, the second format a may be existing 1 st-stage SCI 1, and, for example, may be SCI 1-A in the standard protocol. The first format a may be new 1st-stage SCI 1. To distinguish from the SCI 1-A in the standard protocol, the new 1st-stage SCI 1 is defined as SCI 1-B in this embodiment of this application. The SCI 1-B may reuse at least one field in the SCI 1-A, and refine information indicated by each reused field.

For example, the second signal may include information carried on a PSSCH, such as channel state information, resource selection assistant information, positioning measurement information, and power control assistant information.

For example, the data channel may be a PSSCH, and the transmission information may include information related to transmission of the data channel, for example, information such as a demodulation reference signal (Demodulation Reference Signal, DMRS), a modulation and coding scheme (Modulation and Coding Scheme, MCS), antenna port information, a time-frequency resource, and a frequency domain resource.

The format of the second control information includes at least a third format and a fourth format. The third format indicates a redundancy version (Redundancy Version, RV) used when the second terminal device feeds back the second signal. The fourth format indicates a redundancy version used when the first terminal device sends the data channel (also referred to as data information). Optionally, the second control information may be SCI. For example, the fourth format may be existing 2nd-stage SCI 2, for example, may be the SCI 2-A or the SCI 2-B in the 2nd-stage SCI 2 in the standard protocol. For ease of description, in this embodiment of this application, an example in which the fourth format is the SCI 2-A in the standard protocol is used for description. The third format may be new 2nd-stage SCI 2. To distinguish from the SCI 2-A and the SCI 2-B in the standard protocol, the new 2nd-stage SCI 2 is defined as SCI 2-C in this embodiment of this application. The SCI 2-C may reuse at least one field in the SCI 2-A, and redefine information indicated by each reused field.

For example, the SCI 2-C reuses a Redundancy version field in the SCI 2-A, and the Redundancy version field in the SCI 2-C indicates the redundancy version used when the second terminal device feeds back the second signal. In this way, no additional PSCCH signaling overheads are increased, and system transmission performance is ensured.

The following describes examples of manners of indicating the format of the first control information and the format of the second control information.

Manner 1: When the first control information includes both the first field and the second field, different values of the first field may be used to indicate the format of the first control information, and different values of the second field may be used to indicate the format of the second control information.

For example, one bit (bit) or two bits in the first field may be used to indicate the format of the first control information. For example, when a value of the one bit is 0, it indicates that the format of the first control information is the first format a, or when a value of the one bit is 1, it indicates that the format of the first control information is the second format a. Alternatively, when a value of the one bit is 1, it indicates that the format of the first control information is the first format a, or when a value of the one bit is 0, it indicates that the format of the first control information is the second format a. Alternatively, when a value of the two bits is 00, it indicates that the first control information is in the second format a, or when a value of the two bits is 11 (or 10 or 01), it indicates that the first control information is in the first format a.

For another example, one bit or two bits in the second field may be used to indicate the format of the second control information. For example, when a value of the one bit is 0, it indicates that the format of the second control information is the third format, or when a value of the one bit is 1, it indicates that the format of the second control information is the fourth format. Alternatively, when a value of the one bit is 1, it indicates that the format of the second control information is the third format, or when a value of the one bit is 0, it indicates that the format of the second control information is the fourth format. Alternatively, when a value of the two bits is 00 (or 01), it indicates that the second control information is in the fourth format, or when a value of the two bits is 10 (or 11), it indicates that the second control information is in the third format.

In an example, the first field may be a reserved (reserved bit) field in the SCI 1-A and the SCI 1-B. One bit or two bits in the reserved field indicate the format of the first control information. For example, when a value of the two bits is 00, it indicates that the format of the first control information is the SCI 1-A, or when a value of the two bits is 11, it indicates that the format of the first control information is the SCI 1-B. Alternatively, when a value of the one bit is 0, it indicates that the format of the first control information is the SCI 1-A, or when a value of the one bit is 1, it indicates that the format of the first control information is the SCI 1-B. Alternatively, when a value of the one bit is 1, it indicates that the format of the first control information is the SCI 1-A, or when a value of the one bit is 0, it indicates that the format of the first control information is the SCI 1-B.

The second field may be a 2nd-stage SCI format (a 2nd-stage SCI 2 format) field in the SCI 1-A and the SCI 1-B. One bit or two bits in the 2nd-stage SCI format field indicate the format of the second control information. For example, when a value of the two bits is 00, it indicates that the format of the second control information is the SCI 2-A, or when a value of the two bits is 11, it indicates that the format of the second control information is the SCI 2-C. Alternatively, when a value of the one bit is 0, it indicates that the format of the second control information is the SCI 2-A, or when a value of the one bit is 1, it indicates that the format of the second control information is the SCI 2-C.

In this manner, the reserved field and the 2nd-stage SCI format field in the SCI format in the standard protocol are modified, so that the one bit or the two bits in the reserved field indicate the format of the first control information, and the one bit or the two bits in the 2nd-stage SCI format field indicate the format of the second control information. In this way, the fields in the SCI format in the standard protocol are reused, so that no additional PSCCH signaling overheads are increased, and system transmission performance is ensured.

Manner 2: When the first control information includes only the first field (or the second field), different values of the first field (or the second field) may be used to indicate the format of the first control information and the format of the second control information.

For example, two bits in the first field (or the second field) indicate the format of the first control information and the format of the second control information. When a value of the two bits is 00, it indicates that the format of the first control information is the first format a, and the format of the second control information is the third format; when a value of the two bits is 01, it indicates that the format of the first control information is the first format a, and the format of the second control information is the fourth format; when a value of the two bits is 10, it indicates that the format of the first control information is the second format a, and the format of the second control information is the third format; or when a value of the two bits is 11, it indicates that the format of the first control information is the second format a, and the format of the second control information is the fourth format.

For example, one bit in the first field (or the second field) indicates the format of the first control information and the format of the second control information. When a value of the one bit is 0, it indicates that the format of the first control information is the first format a, and the format of the second control information is the third format; or when a value of the one bit is 1, it indicates that the format of the first control information is the second format a, and the format of the second control information is the fourth format. Alternatively, when a value of the one bit is 1, it indicates that the format of the first control information is the first format a, and the format of the second control information is the third format; or when a value of the one bit is 0, it indicates that the format of the first control information is the second format a, and the format of the second control information is the fourth format.

In an example, the first field may be a reserved field (or a 2nd-stage SCI format field) in the SCI 1-A and the SCI 1-B. Two bits in the reserved field (or the 2nd-stage SCI format field) indicate the format of the first control information and the format of the second control information. For example, when a value of the two bits is 11, it indicates that the format of the first control information is the SCI 1-B, and the format of the second control information is the SCI 2-C; when a value of the two bits is 01, it indicates that the format of the first control information is the SCI 1-B, and the format of the second control information is the SCI 2-A; when a value of the two bits is 10, it indicates that the format of the first control information is the SCI 1-A, and the format of the second control information is the SCI 2-C; or when a value of the two bits is 00, it indicates that the format of the first control information is the SCI 1-A, and the format of the second control information is the SCI 2-A.

In an example, the first field may be a reserved field (or a 2nd-stage SCI format field) in the SCI 1-A and the SCI 1-B. One bit in the reserved field (or the 2nd-stage SCI format field) indicates the format of the first control information and the format of the second control information. For example, when a value of the one bit is 0, it indicates that the format of the first control information is the SCI 1-B, and the format of the second control information is the SCI 2-C; or when a value of the one bit is 1, it indicates that the format of the first control information is the SCI 1-A, and the format of the second control information is the SCI 2-A. Alternatively, when a value of the one bit is 1, it indicates that the format of the first control information is the SCI 1-B, and the format of the second control information is the SCI 2-C; or when a value of the one bit is 0, it indicates that the format of the first control information is the SCI 1-A, and the format of the second control information is the SCI 2-A.

In this manner, the reserved field (or the 2nd-stage SCI format field) in the SCI format in the standard protocol is modified, so that the two bits or the one bit in the reserved field (or the 2nd-stage SCI format field) indicates the format of the first control information and the format of the second control information. In this way, only one field in the SCI format in the standard protocol is reused, so that no additional PSCCH signaling overheads are increased, and system transmission performance is ensured.

The following describes other fields that may be included in the first control information or the second control information.

In an optional implementation, the first format a may further include at least one field indicating the time-frequency resource. In this way, the first terminal device reserves, by using the at least one field, the time-frequency resource for the second terminal device to feed back the second signal, to ensure that the second signal can be fed back on the time-frequency resource in a timely and successful manner.

It should be noted that the reserved time-frequency resource does not need to be occupied for a period of time for a long time, but only a few time-frequency patterns are reserved, so that the second signal can be fed back, thereby achieving optimal performance with as few overheads as possible.

For example, two fields in the first format a indicate the time-frequency resource reserved for the second signal. One of the two fields may indicate a time domain resource reserved for the second signal, and the other field may indicate a reserved frequency domain resource. Alternatively, one field in the first format a indicates the time-frequency resource reserved for the second signal, and the field may indicate both a time domain resource reserved for the second signal and a reserved frequency domain resource. It may be understood that three or more fields in the first format a may indicate the time-frequency resource. A quantity of fields indicating the time-frequency resource is not limited in this embodiment of this application.

In an example, the SCI 1-B reuses a Frequency resource assignment (frequency domain resource allocation) field and a Time resource assignment (time domain resource allocation) field in the SCI 1-A. The Frequency resource assignment field and the Time resource assignment field in the SCI 1-B indicate the time-frequency resource reserved for the second signal. The Frequency resource assignment field indicates a reserved frequency domain resource, and the Time resource assignment field indicates a reserved time domain resource. In this way, no additional PSCCH signaling overheads are increased, and system transmission performance is ensured.

In an optional implementation, in consideration of a time processing capability of the second terminal device for the second signal, the time-frequency resource reserved by the first terminal device for the second terminal device meets the processing time capability (time processing capability) of the second terminal device for the second signal. Therefore, it can be ensured that the second terminal device has time to process the second signal, and feeds back the processed second signal in a timely and successful manner, to guarantee effective running of the system.

For example, if the second signal is channel state information, the second terminal device needs to occupy a specific time to measure a channel state, to generate the channel state information. A location of the reserved time-frequency resource is set after the second terminal device completes measurement of the channel state, and the location of the reserved time-domain resource location may meet a processing time capability (a time processing capability of the channel state information) of the second terminal device for the CSI. For another example, if the second signal is power control assistant information, the second terminal device needs to occupy a specific time to measure power and the like, to generate the power control assistant information. A location of the reserved time-frequency resource is set after the second terminal device completes measurement of the power and the like, and the location of the reserved time domain resource may meet a processing time capability (a time processing capability of the assistant information) of the second terminal device for corresponding assistant information.

In an optional implementation, the third format further includes at least one field used to indicate a feedback type of the second signal. In this way, the first terminal device indicates, by using the at least one field, the feedback type of the second signal that needs to be fed back by the second terminal device, to ensure that the second signal such as channel state information, resource selection assistant information, positioning measurement information, and power control assistant information can be fed back in an effective and timely manner, and improve system performance.

For example, a field in the third format indicates the feedback type of the second signal, and the field may include two bits. Different values of the field indicate different types of the second signal. For example, when a value of the two bits is 00, it indicates that the feedback type of the second signal is a channel state type; when a value of the two bits is 01, it indicates that the feedback type of the second signal is an assistant information type; when a value of the two bits is 10, it indicates that the feedback type of the second signal is a positioning information type; or when a value of the two bits is 11, it indicates that the feedback type of the second signal is a power control type.

It should be noted that, a quantity of fields that are in the first format a and that indicate the second signal and a quantity of bits included in each field may be determined based on the feedback type of the second signal. For example, if the second signal includes four types, the first format a may indicate the second signal by using one field including two or more bits. Alternatively, the first format a may indicate the second signal jointly by using two fields including two or more bits. This is not limited in this embodiment of this application.

In an example, the SCI 2-C reuses a CSI request (channel state information request) field in the SCI 2-A. The CSI request field in the SCI 2-A occupies one bit, and the CSI request field in the SCI 2-C is extended from the original one bit to X bits. X is a positive integer. Different values of the X bits indicate different types of the second signal. Optionally, if the second signal includes four types, X may be 2. In this way, the CSI request field in the SCI 2-A is reused to ensure system transmission performance.

In an optional implementation, the first format a further includes at least one field of modulation and coding information and demodulation pilot information that are used when the second terminal device feeds back the second signal. In this way, the first terminal device indicates, by using the at least one field, the second terminal device to feed back the second signal by using the modulation and coding information and the demodulation pilot information, to ensure that the second signal is fed back in a timely and successful manner.

For example, the modulation and coding information and the demodulation pilot information may include a modulation and coding scheme, a pilot pattern, a quantity of pilot ports, a modulation and coding scheme table indicator, and the like. A plurality of fields in the first format a indicate the modulation and coding information and the demodulation pilot information that are used when the second terminal device feeds back the second signal. For example, four fields may be used to indicate the modulation and coding information and the demodulation pilot information that are used when the second terminal device feeds back the second signal. One field indicates the modulation and coding scheme used when the second terminal device feeds back the second signal, one field indicates the pilot pattern used when the second terminal device feeds back the second signal, one field indicates a modulation and coding scheme scheme table indicator used when the second terminal device feeds back the second signal, and one field indicates the quantity of pilot ports used when the second terminal device feeds back the second signal.

In an example, the SCI 1-B reuses a Modulation and coding scheme (modulation and coding scheme) field, an Additional MCS table indicator (additional modulation and coding scheme table) field, a DMRS pattern (demodulation reference signal pattern) field, and a Number of DMRS port (quantity of demodulation reference signal ports) field in the SCI 1-A. In the four fields in the SCI 1-B, the Modulation and coding scheme field indicates a modulation and coding scheme used when the second terminal device feeds back the second signal, the Additional MCS table indicator field indicates a modulation and coding scheme table indicator used when the second terminal device feeds back the second signal, the DMRS pattern field indicates a pilot pattern used when the second terminal device feeds back the second signal, and the Number of DMRS port field indicates port information used when the second terminal device feeds back the second signal. In this way, the SCI 1-B reuses the fields in the SCI 1-A, so that no additional PSCCH signaling overheads are increased, and system transmission performance is ensured.

In an optional implementation, the first format a further includes at least one field indicating a period based on which the second terminal device feeds back the second signal. In this way, when the first terminal device expects the second terminal device to periodically feed back the second signal, the first terminal device may indicate, by using the at least one field, the second terminal device to feed back the second signal based on the period, to guarantee effective running of the system.

For example, a field in the first format a may be used to indicate the period based on which the second terminal device feeds back the second signal. For example, if the second signal is channel state information, the first terminal device expects the second terminal device to feed back the channel state information once every 5 ms. The field in the first format a may be used to indicate that the period based on which the second terminal device feeds back the channel state information is 5 ms. It may be understood that more fields in the first format a may indicate the period based on which the second terminal device feeds back the second signal. A quantity of fields of the period based on which the second terminal device feeds back the second signal is not limited in this embodiment of this application.

In an example, the SCI 1-B reuses a Resource reservation period (resource reservation period) field in the SCI 1-A, and the Resource reservation period field in the SCI 1-B indicates the period based on which the second terminal device feeds back the second signal. In this way, the Resource reservation period field in the SCI 1-A is reused, so that no additional PSCCH signaling overheads are increased, and system transmission performance is ensured.

In an optional implementation, the third format further includes: all bits of source identifiers (that is, the first identification information) of the first control information and the second control information, and all bits of destination identifiers (that is, the second identification information) of the first control information and the second control information. The first terminal device may send only the first control information and the second control information to the second terminal device, and does not send an associated data channel. In this case, a source identifier and a destination identifier at a physical layer L 1 exist, but a source identifier and a destination identifier at a data link layer L2 do not exist. In this way, the first terminal device may clearly indicate the source identifiers and the destination identifiers of the first control information and the second control information by using all bits of a source identifier and all bits of a destination identifier in the third format, to ensure that an object expected by the first terminal device feeds back the second signal in a timely and successful manner.

For example, two fields in the third format include all the bits of the source identifiers of the first control information and the second control information, and all the bits of the destination identifiers of the first control information and the second control information. One field includes all the bits of the source identifiers of the first control information and the second control information, and the other field includes all the bits of the destination identifiers of the first control information and the second control information. It may be understood that one or more fields in the third format may include all the bits of the source identifiers of the first control information and the second control information, and all the bits of the destination identifiers of the first control information and the second control information. This is not limited in this embodiment of this application.

In an example, the SCI 2-C reuses a Source ID (source identity) field and a Destination ID (destination identity) field in the SCI 2-A. The Source ID field in the SCI 2-A includes only the source identifier at the physical layer L 1, and the source identifier at the physical layer L1 and the source identifier at the data link layer L2 are completed in the Source ID field in the SCI 2-C. The Destination ID field in the SCI 2-A includes only the destination identifier at the physical layer L1, and the destination identifier at the physical layer L 1 and the destination identifier at the data link layer L2 are completed in the Destination ID field in the SCI 2-C. In this way, the Source ID field and the Destination ID field in the SCI 2-A are reused as much as possible to ensure system transmission performance.

In an example, the SCI 2-C reuses a New data indicator (New data indicator, NDI) field, a Redundancy version (Redundancy version) field, a HARQ feedback enabled/disabled indicator (hybrid automatic repeat request processing feedback enabled/disabled indicator) field, a Source ID field, and a Destination ID field in SCI 2-A. The first terminal device and the second terminal device pre-agree that when the second control information is the SCI 2-C, the corresponding NDI, Redundancy version, and HARQ feedback enabled/disabled indicator fields are processed based on a pre-agreement, so that there are idle bits in the NDI field, the Redundancy version field, and the HARQ feedback enabled/disabled indicator field. In this way, in the SCI 2-C, the Source ID field indicates the source identifier at the physical layer L 1, the Destination ID field indicates the destination identifier at the physical layer L 1, and the idle bits in the NDI field, the Redundancy version field, and the HARQ feedback enabled/disabled indicator field may be used to indicate source identifiers at data link layers L2 of the SCI 1-B and the SCI 2-C, and destination identifiers at data link layers L2 of the SCI 1-B and the SCI 2-C. If the idle bits are insufficient, completion may be performed by adding bits. For example, all bits of the source identifiers at the data link layers L2 of the SCI 1-B and the SCI 2-C may be completed with idle bits in the New data indicator field and the HARQ feedback enabled/disabled indicator field in the SCI 2-C, and all bits in the destination ID fields at the data link layers L2 of the SCI 1-B and the SCI 2-C may be completed with idle bits in the Redundancy version field. For another example, all bits in the destination ID fields at the data link layers L2 of the SCI 1-B and the SCI 2-C may be completed with idle bits in the New data indicator field and the HARQ feedback enabled/disabled indicator field in the SCI 2-C, and all bits of the source identifiers at the data link layers L2 of the SCI 1-B and the SCI 2-C may be completed with idle bits in the Redundancy version field. If the idle bits are insufficient, completion may be further performed by adding bits. In this way, the New data indicator field, the HARQ feedback enabled/disabled indicator field, the Redundancy version field, the Source ID field, and the Destination ID field in the SCI 2-A are reused, to ensure system transmission performance.

It should be noted that, in addition to the foregoing fields described as examples, the first control information and the second control information may further include another field. This is not limited in this embodiment of this application.

For example, the first format a is the SCI 1-B, and the second format a is the SCI 1-A. The SCI 1-B reuses fields in the SCI 1-A. Table 3 is a comparison table of definitions of same fields in the SCI 1-B and the SCI 1-A. As shown in Table 3, the SCI 1-A is an SCI format in an existing standard protocol. A value of reserved two bits in the reserved field is 00 by default, indicating that the SCI 1 is the SCI 1-A. Fields in the SCI 1-A and definitions corresponding to the fields are the same as fields in SCI 1 -A and definitions corresponding to the fields in the standard protocol. The SCI 1-B includes the same fields as the SCI 1-A, but definitions of the same fields are different.

**Table 3**

| Field | Definition in SCI 1-A | Definition in SCI 1-B |
|---|---|---|
| Priority | Priority of a time-frequency resource reserved by the TxUE for this time and for the future | Priority of a time-frequency resource reserved by TxUE for RxUE |
| Frequency resource assignment | Frequency domain resource reserved by the TxUE for this time and for the future | Frequency domain resource reserved by TxUE for RxUE to feed back a second signal |
| Time resource assignment | Time domain resource reserved by the TxUE for this time and for the future | Time domain resource reserved by TxUE for RxUE to feed back a second signal |
| Resource reservation period | Period of a time domain resource reserved by the TxUE for the future | Period based on which TxUE indicates RxUE to feed back a second signal |
| DMRS pattern | Pilot pattern used during transmission performed by TxUE | Pilot pattern used when TxUE indicates RxUE to feed back a second signal |
| 2^{nd}-stage SCI format | Indicating a format of corresponding SCI 2 in SCI 1-A | Indicating corresponding SCI 2-C in SCI 1-B |
| Beta_offset indicator | Related parameter of SCI 2 | Related parameter of SCI 2-C |
| Number of DMRS port | Port information used during transmission performed by TxUE | Port information used when TxUE indicates RxUE to feed back a second signal |
| Modulation and coding scheme | MCS used during transmission performed by TxUE | MCS used when TxUE indicates RxUE to feed back a second signal |
| Additional MCS table indicator | MCS table indicator used during transmission performed by TxUE | MCS table indicator used when TxUE indicates RxUE to feed back a second signal |
| PSFCH overhead indication | PSFCH overhead information corresponding to TxUE transmission | PSFCH overhead information used when TxUE indicates RxUE to feed back an indication message |
| Reserved | Reserved bit with no additional indication information | Indicating a format of SCI 1 |

As shown in Table 3, the Priority (priority) field indicates, in the SCI 1-A, a priority of a time-frequency resource occupied by the first terminal device for current transmission and a priority of a time-frequency resource reserved for the future, and indicates, in the SCI 1-B, a priority of a time-frequency resource reserved by the first terminal device for the second terminal device. The Frequency resource assignment field indicates, in the SCI 1-A, a time-frequency resource occupied by the first terminal device for current transmission and a frequency domain resource reserved for the future, and indicates, in the SCI 1-B, a frequency domain resource reserved by the first terminal device for the second terminal device to feed back the second signal. The Time resource assignment field indicates, in the SCI 1-A, a time-frequency resource occupied by the first terminal device for current transmission and a time domain resource reserved for the future, and indicates, in the SCI 1-B, a time domain resource reserved by the first terminal device for the second terminal device to feed back the second signal. The Resource reservation period field indicates, in the SCI 1-A, a period of a time domain resource reserved by the first terminal device for the future, and indicates, in the SCI 1-B, a period based on which the first terminal device indicates the second terminal device to feed back the second signal. The DMRS pattern field indicates, in the SCI 1-A, a pilot pattern used during transmission performed by the first terminal device, and indicates, in the SCI 1-B, a pilot pattern used when the first terminal device indicates the second terminal device to feed back the second signal. The 2nd-stage SCI format field indicates, in the SCI 1-A, a format of the corresponding SCI 2, and indicates, in the SCI 1-B, that an SCI 2 format corresponding to the SCI 1-B is the SCI 2-C. The Beta_offset indicator (β offset indicator) field indicates a related parameter of the SCI 2 in the SCI 1-A, and indicates a related parameter of the SCI 2-C in the SCI 1-B. The Number of DMRS port field indicates, in the SCI 1-A, port information used during transmission performed by the first terminal device, and indicates, in the SCI 1-B, port information used when the first terminal device indicates the second terminal device to feed back the second signal. The Modulation and coding scheme field indicates, in the SCI 1-A, an MCS used during transmission performed by the first terminal device, and indicates, in the SCI 1-B, an MCS used when the first terminal device indicates the second terminal device to feed back the second signal. The Additional MCS table indicator field indicates, in the SCI 1-A, an MCS table indicator used during transmission performed by the first terminal device, and indicates, in the SCI 1-B, an MCS table indicator used when the first terminal device indicates the second terminal device to feed back the second signal. The PSFCH overhead indication (PSFCH overhead indication) field indicates, in the SCI 1-A, PSFCH overhead information corresponding to transmission performed by the first terminal device, and indicates, in the SCI 1-B, PSFCH overhead information used when the first terminal device indicates the second terminal device to feed back an indication message. The reserved field is a reserved bit in the SCI 1-A with no additional indication information, and indicates, in the SCI 1-B, that a format is the SCI 1-B.

For example, the third format a is the SCI 2-C, and the fourth format a is the SCI 2-A. The SCI 2-C reuses fields in the SCI 2-A. Table 4 is a comparison table of definitions of same fields in the SCI 2-C and the SCI 2-A. As shown in Table 4, the SCI 2-A is an SCI format in an existing standard protocol. Fields in the SCI 2-A and definitions corresponding to the fields are the same as fields in SCI 2-A and definitions corresponding to the fields in the standard protocol. The SCI 2-C includes the same fields as SCI 2-A, but definitions of the same fields are different.

**Table 4**

| Field | Definition in SCI 2-A | Definition in SCI 2-C |
|---|---|---|
| HARQ process number | HARQ processing process number used during transmission performed by TxUE | HARQ process number used when TxUE indicates RxUE to feed back a second signal |
| New data indicator | NDI information used during transmission performed by TxUE | NDI information used when TxUE indicates RxUE to feed back a second signal |
| Redundancy version | Redundancy version number used during transmission performed by TxUE | Redundancy version number used when TxUE indicates RxUE to feed back a second signal |
| Source ID | Source ID corresponding to TxUE transmission | L1 ID+L2 ID information corresponding to TxUE transmission |
| Destination ID | Destination ID corresponding to TxUE transmission | L1 ID+L2 ID information corresponding to TxUE transmission |
| HARQ feedback enabled/disabled indicator | Whether to enable feedback of a HARQ associated with TxUE transmission | Whether there is HARQ feedback when TxUE indicates RxUE feeds back a second signal |
| Cast type indicator | Cast type of TxUE | Cast type of TxUE |
| CSI request | CSI indication that TxUE triggers RxUE to feed back | Feedback type of a second signal |

As shown in Table 4, the HARQ process number (hybrid automatic repeat request processing process number) field indicates, in the SCI 2-A, a HARQ processing process number used during transmission performed by the first terminal device, and indicates, in the SCI 2-C, a HARQ process number used when the first terminal device indicates the second terminal device to feed back the second signal. The New data indicator field indicates, in the SCI 2-A, NDI information used during transmission performed by the first terminal device, and indicates, in the SCI 2-C, NDI information used when the first terminal device indicates the second terminal device to feed back the second signal. The Redundancy version field indicates, in the SCI 2-A, a redundancy version number used during transmission performed by the first terminal device, and indicates, in the SCI 2-C, a redundancy version number used when the first terminal device indicates the second terminal device to feed back the second signal. The Source ID field indicates, in the SCI 2-A, a source ID corresponding to transmission performed by the first terminal device, and indicates, in the SCI 2-C, information that corresponds to transmission performed by the first terminal device and that is about a source ID at a physical layer L1 and a source ID at a data link layer L2. The Destination ID field indicates, in the SCI 2-A, a destination ID corresponding to transmission performed by the first terminal device, and indicates, in the SCI 2-C, information that corresponds to transmission performed by the first terminal device and that is about a destination ID at a physical layer L1 and a destination ID at a data link layer L2. The HARQ feedback enabled/disabled indicator field indicates, in the SCI 2-A, whether to enable feedback of a HARQ associated with transmission performed by the first terminal device, and indicates, in the SCI 2-C, whether there is HARQ feedback when the first terminal device indicates the second terminal device to feed back the second signal. The Cast type indicator (type conversion indicator) field indicates a cast type used during transmission performed by the first terminal device in the SCI 2-A, and indicates a cast type used during transmission performed by the first terminal device in the SCI 2-C. The CSI request field indicates, in the SCI 2-A, CSI that the first terminal device triggers the second terminal device to feed back, and indicates, in the SCI 2-C, a feedback type used when the first terminal device indicates the second terminal device to feed back the second signal.

It should be noted that Table 3 and Table 4 are examples of descriptions of fields in the SCI 1-B, SCI 1-A, SCI 2-C and the SCI 2-A. For definitions of the fields, refer to the foregoing related descriptions. Details are not described herein again.

It can be learned from Table 3 and Table 4 that SCI on a sidelink includes indication information such as a time-frequency resource for transmission performed by the TxUE, and is not associated with information such as a time-frequency resource for feedback performed by the RxUE. In this embodiment of this application, the formats and the fields in the SCI in the standard protocol are reused, and no new field needs to be created. Slight modification is made based on existing fields in the SCI 1-A and the SCI 2-A, to obtain newly defined SCI 1-B and SCI 2-C. The SCI 1-B and the SCI 2-C indicate the RxUE to feed back information such as a reserved time-frequency resource of the second signal, to ensure timely and successful feedback of an important message, and improve system performance. In addition, no new field is added to the SCI 1-B and the SCI 2-C, to ensure system transmission performance.

In an example, when the first terminal device sends the first signal to the second terminal device, if the second terminal device needs to feed back the second signal in a timely and guaranteed manner, the first terminal device may reserve a time-frequency resource for the second signal. In this case, the first terminal device may send the SCI 1-B and the SCI 2-C to the second terminal device, to indicate information such as the time-frequency resource reserved for the second terminal device to feed back the second signal, the feedback type of the second signal, and modulation and coding scheme used when the second signal is fed back. In this way, the first terminal device reserves the time-frequency resource for the second signal by sending the sidelink control information SCI 1-B and SCI 2-C, to ensure that the second signal is fed back in a timely and successful manner, and improve communication system performance.

Correspondingly, the second terminal device receives the first control information and the second control information that are sent by the first terminal device.

The first control information may include at least one of the first field or the second field, the at least one of the first field or the second field indicates the format of the first control information, and the at least one of the first field or the second field indicates the format of the second control information.

The format of the first control information includes at least the first format a and the second format a. The first format a indicates the time-frequency resource on which the second terminal device feeds back the second signal, and the second format a indicates the transmission information used when the first terminal device sends a data channel. The format of the second control information includes at least the third format and the fourth format. The third format indicates the redundancy version used when the second terminal device feeds back the second signal. The fourth format indicates the redundancy version used when the first terminal device sends the data channel.

For example, the second terminal device determines the format of the first control information and the format of the second control information based on the first field and/or the second field. If it is determined that the format of the received first control information is the first format a, and the format of the second control information is the third format, for example, the second terminal device receives the SCI 1-B and the SCI 2-C sent by the first terminal device, the second terminal device determines information, such as the reserved time-frequency resource and modulation and coding scheme, indicated by fields in the first format a and the second format a, and prepares to feed back, on the reserved time-frequency resource, the second signal expected by the first terminal device.

In an optional implementation, the second terminal device determines, based on at least one field that is included in the first format a and that indicates the time-frequency resource, the time-frequency resource on which the second signal is fed back. Optionally, the time-frequency resource meets a time processing capability of the second terminal device for the second signal. For example, the second terminal device may determine, by using a Frequency resource assignment field in the SCI 1-B, a frequency domain resource on which the second signal is fed back, and determine, by using a Time resource assignment field in the SCI 1-B, a time domain resource on which the second signal is fed back.

In an optional implementation, the second terminal device determines the feedback type of the second signal based on at least one field that is included in the third format and that indicates the second signal. For example, the second terminal device may determine the feedback type of the second signal by using a CSI request in the SCI 2-C.

In an optional implementation, the second terminal device determines, based on the at least one field that is included in the first format a and that indicates the modulation and coding information and the demodulation pilot information that are used when the second terminal device feeds back the second signal, the modulation and coding information and the demodulation pilot information that are used when the second signal is fed back. For example, the second terminal device may determine, by using the Modulation and coding scheme field in the SCI 1-B, a modulation and coding scheme used when the second signal is fed back; or determine, by using the Additional MCS table indicator field in the SCI 1-B, a modulation and coding scheme table used when the second signal is fed back; or determine, by using the DMRS pattern field in the SCI 1-B, a pilot pattern used when the second signal is fed back; or determine, by using the Number of DMRS port field in the SCI 1 -B, port information used when the second signal is fed back.

In an optional implementation, the second terminal device determines, based on at least one field that is included in the first format a and that indicates the period based on which the second terminal device feeds back the second signal, the period based on which the second signal is fed back. For example, the second terminal device may determine, by using the Resource reservation period field in the SCI 1-B, the period based on which the second signal is fed back.

In an optional implementation, the second terminal device determines source identifiers and destination identifiers of the first control information and the second control information based on all bits of the source identifiers of the first control information and the second control information and all bits of the destination identifiers of the first control information and the second control information, where the first control information and the second control information are included in the third format. For example, the second terminal device may determine the source identifier of the SCI 2-C by using source identifiers at the physical layer L1 and the data link layer L2 in the Source ID field in the SCI 2-C, and determine the destination identifier of the SCI 2-C by using destination identifiers at the physical layer L1 and the data link layer L2 in the Destination ID field in the SCI 2-C.

For example, the second terminal device determines, by using the source identifiers and the destination identifiers of the first control information and the second control information, a destination of a message transmitted this time. When the destination identifier determined by the second terminal device is different from an identifier of the second terminal device, the second terminal device does not use the time-frequency resource, so that the reserved time-frequency resource can be avoided, to ensure that the second signal is fed back on the time-frequency resource in a timely and successful manner. Optionally, the second terminal device may determine, based on a priority of the time-frequency resource, whether to avoid the reserved time-frequency resource, to guarantee successful transmission of data with a higher priority, and improve system performance.

Step 1002: When the first control information is in the first format a, and the second control information is in the third format, the second terminal device feeds back the second signal to the first terminal device on the time-frequency resource.

In this step, when the first control information is in the first format a, and the second control information is in the third format, the second terminal device may directly feed back the second signal to the first terminal device on the reserved time-frequency resource determined in step 1001. This ensures that the second signal is fed back in a timely and successful manner, and improves system performance. In addition, the second terminal device does not need to select a time-frequency resource through channel contention, and does not need to send control information, thereby reducing power consumption of the second terminal device.

For example, the second terminal device may feed back, on the determined time-frequency resource based on the determined modulation and coding information and demodulation pilot information that are used when the second signal is sent, second signal content that needs to be fed back, to ensure that the second signal such as channel state information, resource selection assistant information, positioning measurement information, and power control assistant information can be fed back in an effective and timely manner, and improve system performance. Further, the second terminal device may further feed back the second signal in a timely manner based on the determined period based on which the second signal is fed back, to guarantee effective running of the system.

In an example, when the second terminal device receives the SCI 1-B and the SCI 2-C, the second terminal device may feed back the second signal based on information determined by fields such as the Frequency resource assignment field, the Time resource assignment field, the CSI request field, the Modulation and coding scheme field, the Number of DMRS port field, and the Resource reservation period field in the SCI 1-B.

In an optional implementation, when the first control information is in the first format a, and the second control information is in the third format, the second terminal device may feed back HARQs for the first control information and the second control information, or may not feed back HARQs for the first control information and the second control information. For example, a manner of feeding back the HARQ information includes: sending an acknowledgment (Acknowledgment, ACK) or sending a negative acknowledgment (Negative Acknowledgment, NACK).

For example, when the second terminal device receives the SCI 1 -B and the SCI 2-C, the second terminal device may not feed back HARQs for the SCI 1-B and the SCI 2-C, or may feed back HARQs for the SCI 1-B and the SCI 2-C. When the second terminal device feeds back the HARQs for the SCI 1-B and the SCI 2-C, if receiving fails, the second terminal device transmits HARQ-NACK information on a PSFCH, and in another case, does not transmit information on the PSFCH; or if receiving succeeds, the second terminal device transmits HARQ-ACK information on a PSFCH, and if receiving fails, the second terminal device transmits the HARQ-NACK information.

Correspondingly, when the first control information is in the first format a, and the second control information is in the third format, the first terminal device receives, on the time-frequency resource, the second signal fed back by the second terminal device.

In this step, when the first control information is in the first format a, and the second control information is in the third format, the first terminal device may directly receive, on the time-frequency resource, the second signal fed back by the second terminal device, does not need to blindly detect a time-frequency resource on which the second signal is located, and does not need to detect control information, thereby reducing power consumption of the first terminal device.

In an example, after sending the SCI 1-B and the SCI 2-C, the first terminal device may receive, on a time domain resource specified by the Frequency resource assignment field and the Time resource assignment field in the SCI 1-B, the second signal fed back by the second terminal device.

In an optional implementation, when the first control information is in the first format a, and the second control information is in the third format, the first terminal device may detect HARQs for the first control information and the second control information, or may not detect HARQs for the first control information and the second control information. Optionally, if the second terminal device feeds back the HARQs for the first control information and the second control information, the first terminal device may receive the HARQs, thereby improving reliability of communication between the first terminal device and the second terminal device.

For example, after the first terminal device sends the SCI 1-B and the SCI 2-C, the first terminal device may not detect the HARQs for the SCI 1-B and the SCI 2-C, or may detect the HARQs for the SCI 1-B and the SCI 2-C. Optionally, if the second terminal device feeds back the HARQs for the SCI 1-B and the SCI 2-C, the first terminal device may receive the HARQ.

In this embodiment of this application, the first control information includes at least one of the first field or the second field, the at least one of the first field or the second field indicates the format of the first control information, and the at least one of the first field or the second field indicates the format of the second control information. The first format a of the first control information indicates the time-frequency resource on which the second terminal device feeds back the second signal, and the third format of the second control information indicates the redundancy version used when the second terminal device feeds back the second signal. In this way, the time-frequency resource is reserved for the second signal, to ensure that the second signal is fed back in a timely and successful manner, and improve system performance.

FIG. 11 is a schematic flowchart of exchanging a signal between a first terminal device and a second terminal device according to this application.

Step 1101: The first terminal device sends first control information, second control information, and a data channel (or data information) to the second terminal device.

The first control information indicates transmission information used when the first terminal device sends the data channel. For content of the transmission information, refer to the foregoing related descriptions. Details are not described herein again. For example, the first control information and the second control information are SCI, and the data channel is a PSSCH. Optionally, the first control information may be existing 1 st-stage SCI 1, for example, may be SCI 1-A in a standard protocol. For fields included in the SCI 1-A and definitions of the fields, refer to Table 3.

The first control information may include at least one field indicating a format of the second control information. The format of the second control information includes at least a first format b and a second format b. The first format b indicates a time-frequency resource (that is, a second allocated resource) on which the second terminal device feeds back a second signal. The second format b indicates a redundancy version used when the first terminal device sends the data channel. For content of the second signal, the time-frequency resource, and the like, refer to the foregoing related descriptions. Details are not described herein again. Optionally, the second format b may be existing two-stage SCI 2, for example, may be SCI 2-A or SCI 2-B in the standard protocol. For ease of description, in this embodiment of this application, an example in which the second format b is SCI 2-A in the standard protocol is used for description. For fields included in the SCI 2-A and definitions of the fields, refer to Table 4. The first format b may be new 2nd-stage SCI 2. To distinguish from the SCI 2-A and the SCI 2-B in the standard protocol, the new 2nd-stage SCI 2 is defined as SCI 2-D in this embodiment of this application. The SCI 2-D includes at least one field in the SCI 2-A, and on this basis, a new field is added to carry information such as a reserved time-frequency resource.

For example, the first control information may indicate the format of the second control information by using one field, and different values of the field may indicate the format of the second control information. For example, one bit (bit) or two bits in the field may be used to indicate the format of the second control information. For example, when a value of the two bits is 11 (or 10), it indicates that the format of the second control information is the first format b, or when a value of the two bits is 00 (or 01), it indicates that the format of the second control information is the second format b.

In an example, the field may be a reserved field in the SCI 1 -A, and two bits in the reserved field indicate the format of the second control information. For example, when a value of the two bits is 00, it indicates that the format of the second control information is the SCI 2-A, or when a value of the two bits is 11, it indicates that the format of the second control information is the SCI 2-D. Alternatively, the field may be a 2nd-stage SCI format field in the SCI 1-A, and two bits in the 2nd-stage SCI format field indicate the format of the second control information. For example, when a value of the two bits is 00, it indicates that the format of the second control information is the SCI 2-A, or when a value of the two bits is 10, it indicates that the format of the second control information is the SCI 2-D.

In this manner, the reserved field or the 2nd-stage SCI format field in the SCI 1-A in the SCI format in the standard protocol is modified, and the two bits in the reserved field in the SCI 1 -A indicate the format of the second control information, or the two bits in the 2nd-stage SCI format field indicate the format of the second control information. In this way, the fields in the SCI format in the standard protocol are reused, so that no additional PSCCH signaling overheads are increased, and system transmission performance is ensured.

The following describes other fields that may be included in the second control information.

In an optional implementation, the first format b may include at least one field indicating the time-frequency resource. The first terminal device reserves, by using the at least one field, the time-frequency resource for the second terminal device to feed back the second signal, to ensure that the second signal can be fed back on a part or the whole of the time-frequency resource in a timely and successful manner.

In this implementation, for specific content that different quantities of fields in the first format b indicate the time-frequency resource reserved for the second signal, refer to the foregoing related descriptions in the first format a. Details are not described herein again. It should be noted that, different from the fields reused in the first format a, the field in the first format b is a newly added field.

In an example, a Frequency resource assignment field and a Time resource assignment field are newly added in the SCI 2-D based on the SCI 2-A. The two fields, namely, the Frequency resource assignment field and the Time resource assignment field, in the SCI 2-D indicate the time-frequency resource reserved for the second signal. The Frequency resource assignment field indicates a reserved frequency domain resource, and the Time resource assignment field indicates a reserved time domain resource.

In an optional implementation, in consideration of a time processing capability of the second terminal device for the second signal, the time-frequency resource reserved by the first terminal device for the second terminal device meets the processing time capability of the second terminal device for the second signal. Therefore, it can be ensured that the second terminal device has time to process the second signal, and feeds back the processed second signal in a timely and successful manner, to guarantee effective running of the system. For specific content about the time processing capability in this implementation, refer to the foregoing related descriptions. Details are not described herein again.

In an optional implementation, the first format b may further include: at least one field used to indicate a feedback type of the second signal. In this way, the first terminal device indicates, by using the at least one field, the feedback type of the second signal type that needs to be fed back by the second terminal device, to ensure that the second signal such as channel state information, resource selection assistant information, positioning measurement information, and power control assistant information can be fed back in an effective and timely manner, and improve system performance.

In this implementation, for specific content that different quantities of fields in the first format b indicate the feedback type of the second signal type, refer to the foregoing related descriptions in the first format a. Details are not described herein again.

In an example, the SCI 2-D reuses a CSI request (channel state information request) field in the SCI 2-A. The CSI request field in the SCI 2-A occupies one bit, and the CSI request field in the SCI 2-D is extended from the original one bit to X bits. X is a positive integer. Different values of the X bits indicate different types of the second signal. Optionally, if the second signal includes four types, X may be 2. In this way, the CSI request field in the SCI 2-A is reused to ensure system transmission performance.

In an optional implementation, the first format b may further include at least one field indicating a period based on which the second terminal device feeds back the second signal. In this way, when the first terminal device expects the second terminal device to periodically feed back the second signal, the first terminal device may indicate, by using the at least one field, the second terminal device to feed back the second signal based on the period, to guarantee effective running of the system.

In this implementation, for specific content of the period that is indicated in the first format b and based on which the second signal is fed back, refer to the foregoing related descriptions in the first format a. Details are not described herein again. It should be noted that, different from the fields reused in the first format a, the field in the first format b is a newly added field.

In an example, a Resource reservation period field is newly added in the SCI 2-D based on the SCI 2-A, and the Resource reservation period field in the SCI 2-D indicates the period based on which the second terminal device feeds back the second signal.

It should be noted that, in addition to the foregoing fields described as examples, the first control information and the second control information may further include another field. This is not limited in this embodiment of this application.

For example, the first control information is the SCI 1 -A, the first format b is the SCI 2-D, and the second format b is the SCI 2-A. For definitions of fields in the SCI 1-A, refer to Table 3. Details are not described herein again. A value of two reserved bits in the reserved field is 00 by default, indicating that the SCI 1 is the SCI 1-A, or one bit in the reserved field may be used to indicate the format of the second control information. The SCI 2-D may include all fields in the SCI 2-A, and on this basis, several fields are newly added, as shown in a comparison table of definitions of the fields in the SCI 2-A and the SCI 2-D in Table 5.

**Table 5**

| Field | Definition in SCI 2-A | Definition in SCI 2-D |
|---|---|---|
| HARQ process number | HARQ processing process number used during transmission performed by TxUE | HARQ processing process number used during transmission performed by TxUE |
| New data indicator | NDI information used during transmission performed by TxUE | NDI information used during transmission performed by TxUE |
| Redundancy version | Redundancy version number used | Redundancy version number used |
| | during transmission performed by TxUE | during transmission performed by TxUE |
| Source ID | Source ID corresponding to TxUE transmission | Source ID corresponding to TxUE transmission |
| Destination ID | Destination ID corresponding to TxUE transmission | Destination ID corresponding to TxUE transmission |
| HARQ feedback enabled/disabled indicator | Whether to enable feedback of a HARQ associated with TxUE transmission | Whether to enable feedback of a HARQ associated with TxUE transmission |
| Cast type indicator | Cast type of TxUE | Cast type of TxUE |
| CSI request | CSI indication that TxUE triggers RxUE to feed back | Feedback type of a second signal |
| Frequency resource assignment | \ | Frequency domain resource reserved by TxUE for RxUE to feed back a second signal |
| Time resource assignment | \ | Time domain resource reserved by TxUE for RxUE to feed back a second signal |
| Resource reservation period | \ | Period based on which TxUE indicates RxUE to feed back a second signal |

As shown in Table 5, the HARQ process number field indicates, in both the SCI 2-A and the SCI 2-D, a HARQ processing process number used during transmission performed by the first terminal device. The New data indicator field indicates, in both the SCI 2-A and the SCI 2-D, NDI information used during transmission performed by the first terminal device. The Redundancy version field indicates, in both the SCI 2-A and the SCI 2-D, a redundancy version number used during transmission performed by the first terminal device. The Source ID field indicates, in both the SCI 2-A and the SCI 2-D, a source ID corresponding to transmission performed by the first terminal device. The Destination ID field indicates, in both the SCI 2-A and the SCI 2-D, a destination ID corresponding to transmission performed by the first terminal device. The HARQ feedback enabled/disabled indicator field indicates, in both the SCI 2-A and the SCI 2-D, whether to enable feedback of a HARQ associated with transmission performed by the first terminal device. The Cast type indicator field indicates, in both the SCI 2-A and the SCI 2-D, a cast type used during transmission performed by the first terminal device. The CSI request field indicates, in the SCI 2-A, CSI that the first terminal device triggers the second terminal device to feed back, and indicates, in the SCI 2-D, a feedback type used when the first terminal device indicates the second terminal device to feed back the second signal. In addition, the SCI 2-D further includes: the newly added Frequency resource assignment field, indicating a reserved frequency domain resource; the newly added Time resource assignment field, indicating a reserved time domain resource; and the newly added Resource reservation period field, indicating a period based on which the second terminal device feeds back the second signal.

It can be learned from Table 5 that SCI on a sidelink includes indication information such as a time-frequency resource for transmission performed by the TxUE, and is not associated with information such as a time-frequency resource for feedback performed by the RxUE. In this embodiment of this application, based on the formats and the fields in the SCI in the standard protocol, a new field is added to carry information such as the reserved time-frequency resource. The SCI is used similarly as a combination of a DL grant (downlink grant) and a UL grant (uplink grant). Slight modification is made based on existing fields in the SCI 2-A, to obtain newly defined SCI 2-D. The SCI 2-D indicates information such as the reserved time-frequency resource used when the RxUE feeds back the second signal, to ensure that an important message is fed back in a timely and successful manner, and improve system performance. In addition, compared with the existing SCI 2-A, in the SCI 2-D, only one field is redefined, and definitions of other fields remain unchanged, to change definitions of fields in the SCI 2-A in the existing protocol as little as possible, and improve applicability of the newly defined SCI 2-D.

In an example, when the first terminal device sends a message to the second terminal device, if the second terminal device needs to feed back the second signal in a timely and guaranteed manner, the first terminal device may reserve a time-frequency resource for the second signal. In this case, the first terminal device may send the SCI 1-A, SCI 2-D, and the PSSCH to the second terminal device, to indicate transmission information of the PSSCH by using the SCI 1-A, indicate, by using the SCI 2-D, information such as the time-frequency resource reserved for the second terminal device to feed back the second signal and the feedback type of the second signal, and provide information such as modulation and coding scheme by using the SCI 1-A. In this way, the first terminal device reserves the time-frequency resource for the second signal by sending the sidelink control information SCI 2-D and SCI 1-A, and the PSSCH, to ensure that the second signal is fed back in a timely and successful manner, and improve communication system performance of SL-U.

Correspondingly, the second terminal device receives the first control information, the second control information, and the data channel that are sent by the first terminal device.

The first control information indicates transmission information used when the first terminal device sends the data channel. The first control information includes at least one field indicating the format of the second control information. The format of the second control information includes at least the first format b and the second format b. The first format b indicates the time-frequency resource on which the second terminal device feeds the second signal, and the second format b indicates a redundancy version used when the first terminal device sends the data channel.

For example, the second terminal device determines the format of the second control information based on the field that is in the first control information and that indicates the format of the second control information. If it is determined that the format of the received second control information is the first format b, for example, the second control information received by the second terminal device is the SCI 2-D, the second terminal device determines information, such as the reserved time-frequency resource and a period based on which an indication message is fed back, that is indicated by the field in the first format b, and prepares to feed back, on the reserved time-frequency resource, the second signal expected by the first terminal device.

In an optional implementation, the second terminal device determines, based on at least one field that is included in the first format b and that indicates the time-frequency resource, the time-frequency resource on which the second signal is fed back. Optionally, the time-frequency resource meets a time processing capability of the second terminal device for the second signal. For example, the second terminal device may determine, by using a Frequency resource assignment field in the SCI 2-D, a frequency domain resource on which the second signal is fed back, and determine, by using a Time resource assignment field in the SCI 2-D, a time domain resource on which the second signal is fed back.

In an optional implementation, the second terminal device may further use, based on a signal interference status of the time-frequency resource, a part with weak interference or no interference in the time-frequency resource as the time-frequency resource on which the second signal is fed back, to ensure transmission performance; and/or the second terminal device may use, based on a data volume of the second signal to be fed back, a part of the time-frequency resource as the time-frequency resource on which the second signal is fed back, to reduce overheads.

In an optional implementation, the second terminal device determines the feedback type of the second signal based on at least one field that is included in the first format b and that indicates the second signal. For example, the second terminal device may determine the feedback type of the second signal by using a CSI request in the SCI 2-D.

In an optional implementation, the second terminal device determines, based on at least one field that is included in the first format b and that indicates the period based on which the second terminal device feeds back the second signal, the period based on which the second signal is fed back. For example, the second terminal device may determine, by using the Resource reservation period field in the SCI 2-D, the period based on which the second signal is fed back.

In an optional implementation, the second terminal device determines source identifiers and destination identifiers of the first control information and the second control information based on the Source ID field and the Destination ID field in the first format b and a source identifier and a destination identifier at a data link layer L2 included in the data channel. When the destination identifier determined by the second terminal device is different from an identifier of the second terminal device, the second terminal device does not use the time-frequency resource, so that the reserved time-frequency resource can be avoided, to ensure that the second signal is fed back on the time-frequency resource in a timely and successful manner. Optionally, the second terminal device may determine, based on a priority of the time-frequency resource, whether to avoid the reserved time-frequency resource, to guarantee successful transmission of data with a higher priority, and improve system performance.

Step 1102: When the second control information is in the first format b, the second terminal device sends, to the first terminal device, the second signal, control information indicating the transmission information used when the second terminal device sends the second signal, and control information indicating the redundancy version used when the second terminal device sends the second signal. The second signal occupies a part or the whole of the reserved time-frequency resource.

In this step, when the second control information is in the first format b, the second terminal device may directly feed back the second signal to the first terminal device on the reserved time-frequency resource determined in step 1101, to ensure that the second signal is fed back in a timely and successful manner, and improve system performance. In addition, the second terminal device does not need to select the time-frequency resource through channel contention, thereby reducing power consumption of the second terminal device.

For example, the second terminal device may reuse, on the determined time-frequency resource, the modulation and coding information and the demodulation pilot information that are indicated in the first control information, and feed back second signal content that needs to be fed back, to ensure that the second signal such as channel state information, resource selection assistant information, positioning measurement information, and power control assistant information can be fed back in an effective and timely manner, and improve system performance. Further, the second terminal device may further feed back the second signal in a timely manner based on the determined period based on which the second signal is fed back, to guarantee effective running of the system.

In an example, when the second terminal device receives the SCI 1-A and the SCI 2-D, the second terminal device may feed back the second signal based on information determined by fields such as the Frequency resource assignment field, the Time resource assignment field, the CSI request field, and the Resource reservation period field in the SCI 2-D and information determined by fields such as the Modulation and coding scheme field and the Number of DMRS port field in the SCI 1-A.

In addition, the second terminal device may further feed back a HARQ for the data channel sent by the first terminal device. For example, a manner of feeding back information about the HARQ includes an ACK or a NACK.

For example, when the second terminal device receives the SCI 1-A, the SCI 2-D, and the data channel, the second terminal device may feed back the HARQ for the data channel. If the second terminal device fails to receive the data channel, the second terminal device transmits HARQ-NACK information on a PSFCH, or in another case, the second terminal device does not transmit information on a PSFCH. Alternatively, if the second terminal device successfully receives the data channel, the second terminal device transmits HARQ-ACK information on a PSFCH, or if the second terminal device fails to receive the data channel, the second terminal device transmits HARQ-NACK information on a PSFCH.

Correspondingly, when the second control information is in the first format b, the first terminal device receives, from the second terminal device, the second signal, the control information indicating the transmission information used when the second terminal device sends the second signal, and the control information indicating the redundancy version used when the second terminal device sends the second signal. The second signal occupies a part or the whole of the reserved time-frequency resource.

In this step, when the second control information is in the first format b, the first terminal device may directly receive, on the time-frequency resource, the second signal fed back by the second terminal device, to obtain the expected second signal in a timely manner.

After sending the SCI 1-A and the SCI 2-D, the first terminal device may receive, on a time domain resource specified by the Frequency resource assignment field and the Time resource assignment field in the SCI 2-D, the second signal fed back by the second terminal device.

In addition, the first terminal device may further receive the HARQ that is fed back by the second terminal device and that is for the data channel. Therefore, reliability of communication between the first terminal device and the second terminal device is improved. For example, a manner of feeding back information about the HARQ includes an ACK or a NACK.

For example, if the first terminal device receives the HARQ-NACK information fed back by the second terminal device for the data channel, the first terminal device may determine that the second terminal device fails to receive the data channel, and perform retransmission, or if the first terminal device does not receive the HARQ information fed back by the second terminal device for the data channel, the first terminal device may determine that the second terminal device successfully receives the data channel. Alternatively, if the first terminal device receives the HARQ-ACK information fed back by the second terminal device for the data channel, the first terminal device may determine that the second terminal device successfully receives the data channel, or if the first terminal device receives the HARQ-NACK information fed back by the second terminal device for the data channel, the first terminal device may determine that the second terminal device fails to receive the data channel, and perform retransmission.

In this embodiment of this application, the first control information indicates the transmission information used when the first terminal device sends the data channel, the first control information includes at least one field indicating a format of the second control information, and the first format b of the second control information indicates the time-frequency resource on which the second terminal device feeds back the second signal. In this way, the time-frequency resource is reserved for the second signal, to ensure that the second signal is fed back in a timely and successful manner, and improve system performance.

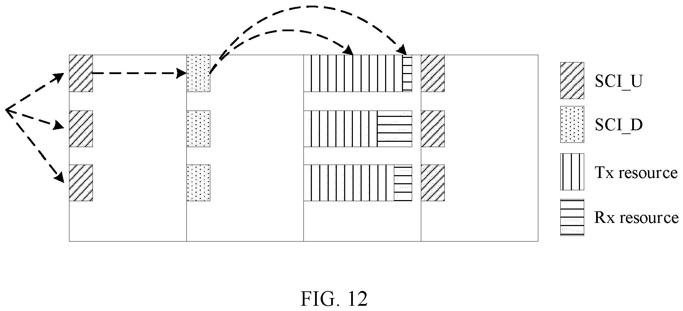

Based on the foregoing content and a same concept, FIG. 12 is an example schematic diagram of resource allocation according to this application. As shown in FIG. 12, both SCI_U and SCI_D may be newly defined 2nd-stage SCI 2. The SCI_U is 2nd-stage SCI 2 sent by a first terminal device to a first apparatus, and the SCI_U includes a BSR_Tx and a BSR_Rx. The SCI_D is 2nd-stage SCI 2 sent by the first apparatus to the first terminal device. The SCI_D includes first indication information and second indication information. The first indication information indicates a first allocated resource (represented by a Tx resource in FIG. 12), and the second indication information indicates a second allocated resource (represented by an Rx resource in FIG. 12). For example, the first terminal device first sends the SCI_U to the first apparatus, and the first apparatus receives the SCI_U. Then, the first apparatus generates the SCI_D based on the SCI_U, and sends the SCI_D to the first terminal device. The SCI_D indicates the Tx resource and the Rx resource. Correspondingly, the first terminal device sends a first signal to the second terminal device on the Tx resource, and the second terminal device sends a second signal to the second terminal device on the Rx resource.

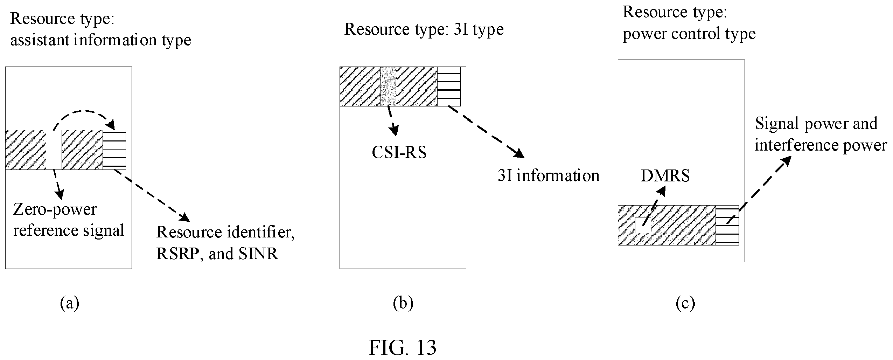

Based on the foregoing content and a same concept, FIG. 13 is another example schematic diagram of resource allocation according to this application. (a) in FIG. 13 is an assistant information feedback scenario. A resource type may be an assistant information type. A first signal may be specifically a zero-power reference signal, and is used to measure interference between neighboring groups or inter-systems. A second signal is specifically resource selection assistant information. The resource selection assistant information includes a resource identifier, RSRP, and an SINR. (b) in FIG. 13 is a channel state information measurement scenario. A resource type may be a 31 type, a first signal is specifically a CSI-RS, and a second signal is specifically channel state information, and may be specifically 31 information. The 31 information specifically includes a PMI, a CQI, and an RI. (c) in FIG. 13 is a power control information feedback scenario. A resource type may be a power control type, a first signal is specifically a DMRS, and a second signal is specifically power control assistant information. The power control assistant information may specifically include signal power and interference power.

It may be understood that, in the foregoing method embodiments, the methods and the operations implemented by the terminal device may alternatively be implemented by a component (for example, a chip or a circuit) that may be used in the terminal device, and the methods and the operations implemented by the network device may alternatively be implemented by a component (for example, a chip or a circuit) that may be used in the network device.

In the foregoing embodiments provided in this application, the methods provided in embodiments of this application are separately described from a perspective of interaction between devices. To implement functions in the foregoing methods provided in embodiments of this application, the terminal device and the network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In the embodiments of this application, division into modules is an example, and is merely a logical function division, and may be another division during actual implementation. In addition, functional modules in the embodiments of this application may be integrated into one processor, or each of the modules may exist alone physically, or two or more modules may be integrated into one module. The integrated module may be implemented in a form of hardware, or may be implemented in a form of a software functional module.

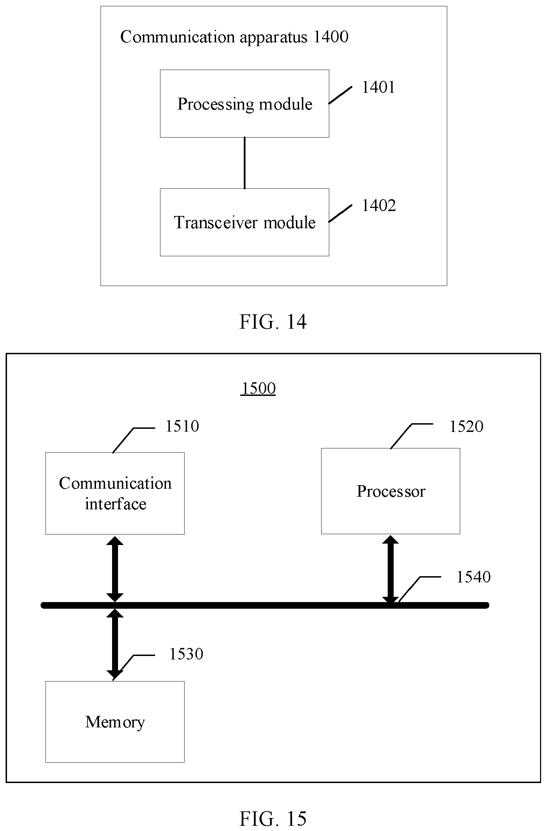

Based on the foregoing content and a same concept, FIG. 14 and FIG. 15 each are a schematic diagram of a possible structure of a communication apparatus according to this application. The communication apparatuses may be configured to implement functions of the first terminal device or the first apparatus in the foregoing method embodiments. Therefore, beneficial effects of the foregoing method embodiments can also be implemented.

In this application, the communication apparatus may be the terminal device 1 or the network device shown in FIG. 1, or the communication apparatus may be the terminal device 1 or the terminal device 0 shown in FIG. 3. Certainly, the communication apparatus may alternatively be a module (for example, a chip) applied to the terminal device or the network device.

As shown in FIG. 14, the communication apparatus 1400 includes a processing module 1401 and a transceiver module 1402. The communication apparatus 1400 is configured to implement functions of the first terminal device or the first apparatus in the foregoing method embodiments.

When the communication apparatus 1400 is configured to implement the function of the first terminal device in the foregoing method embodiments:
In an optional implementation, the processing module 1401 is configured to control the transceiver module 1402 to send a resource request to the first apparatus, where the resource request is used to request a first resource and a second resource, the first resource is used by the communication apparatus 1400 to send a first signal to a second terminal device, and the second resource is used by the communication apparatus 1400 to receive a second signal from the second terminal device. The processing module 1401 is further configured to control the transceiver module 1402 to receive a resource response sent by the first apparatus in response to the resource request.

In an optional implementation, the first apparatus is a group header terminal device or a network device.

In an optional implementation, the resource request includes a data volume of first data in the first signal and/or a data volume of second data in the second signal.

In an optional implementation, the resource request includes a type of the first signal and/or a feedback type of the second signal.

In an optional implementation, the communication apparatus 1400 includes preconfigured information, the preconfigured information includes a plurality of pieces of index information, and each piece of index information corresponds to one preset resource. The resource request includes first index information, the first index information is one of the plurality of pieces of index information, and the first resource is a preset resource corresponding to the first index information.

In an optional implementation, the preconfigured information further includes a plurality of types, and each type corresponds to at least one piece of index information. The resource request further includes a type of the first signal, the type of the first signal is one of the plurality of types, and the first index information is one of at least one piece of index information corresponding to the type of the first signal.

In an optional implementation, the resource request further includes feedback information of the second signal, and the feedback information of the second signal includes a feedback type of the second signal and a feedback element corresponding to the feedback type of the second signal.

In an optional implementation, the resource request further includes feedback time information, and the feedback time information indicates a time domain resource and/or a period resource on which the second signal is carried.

In an optional implementation, the processing module 1401 is further configured to control the transceiver module 1402 to send control information to the second terminal device, where the control information includes first indication information and/or second indication information obtained by the communication apparatus 1400 from the resource response, the first indication information indicates a resource on which the communication apparatus 1400 sends the first signal, and the second indication information indicates a resource on which the communication apparatus 1400 receives the second signal.

In an optional implementation, the control information further includes a preset feedback type, and the feedback type of the second signal is the same as the preset feedback type in the control information.

In an optional implementation, the processing module 1401 is further configured to: control, based on the first indication information in the resource response, the transceiver module 1402 to send the first signal to the second terminal device, and/or control the transceiver module 1402 to receive the second signal from the second terminal device based on the second indication information in the resource response.

In an optional implementation, the second signal is sent by the second terminal device to the communication apparatus 1400 in response to the first signal.

In an optional implementation, the feedback type includes at least one or more of a channel state type, a positioning information type, an assistant information type, and a power control type. A feedback element corresponding to the channel state type includes at least one or more of a CQI, an RI, and a PMI. A feedback element corresponding to the positioning information type includes at least one or more of an RTT, an AoA, and an AoD. A feedback element corresponding to the assistant information type includes at least one or more of a resource identifier, an RSRP, and an SINR. A feedback element corresponding to the power control type includes at least signal power and/or interference power.

When the communication apparatus 1400 is configured to implement the function of the first apparatus in the foregoing method embodiments:
In an optional implementation, the processing module 1401 is configured to control the transceiver module 1402 to receive a resource request from the first terminal device, where the resource request is used to request a first resource and a second resource, the first resource is a resource on which the first terminal device sends a first signal to a second terminal device, and the second resource is a resource on which the first terminal device receive a second signal from the second terminal device. The processing module 1401 is further configured to control, in response to the resource request, the transceiver module 1402 to send a resource response to the first terminal device.

In an optional implementation, the communication apparatus 1400 is a group header terminal device or a network device.

In an optional implementation, the resource request includes a data volume of first data in the first signal and/or a data volume of second data in the second signal.

In an optional implementation, the resource request includes a type of the first signal and/or a feedback type of the second signal.

In an optional implementation, the communication apparatus 1400 includes preconfigured information, the preconfigured information includes a plurality of pieces of index information, and each piece of index information corresponds to one preset resource. The resource request includes first index information, the first index information is one of the plurality of pieces of index information, and the first resource is a preset resource corresponding to the first index information.

In an optional implementation, the preconfigured information further includes a plurality of types, and each type corresponds to at least one piece of index information. The resource request further includes a type of the first signal, the type of the first signal is one of the plurality of types, and the first index information is one of at least one piece of index information corresponding to the type of the first signal.

In an optional implementation, the resource request further includes feedback information of the second signal, and the feedback information of the second signal includes a feedback type of the second signal and a feedback element corresponding to the feedback type of the second signal.

In an optional implementation, the resource request further includes feedback time information, and the feedback time information indicates a time domain resource and/or a period resource on which the second signal is carried.

In an optional implementation, the processing module 1401 is specifically configured to: generate the resource response based on the resource request, where the resource response includes first indication information and second indication information, the first indication information indicates a resource on which the first terminal device sends the first signal, and the second indication information indicates a resource on which the first terminal device receives the second signal; and control the transceiver module 1402 to send the resource response to the first terminal device.

In an optional implementation, the feedback type includes at least one or more of a channel state type, a positioning information type, an assistant information type, and a power control type. A feedback element corresponding to the channel state type includes at least one or more of a CQI, an RI, and a PMI. A feedback element corresponding to the positioning information type includes at least one or more of an RTT, an AoA, and an AoD. A feedback element corresponding to the assistant information type includes at least one or more of a resource identifier, an RSRP, and an SINR. A feedback element corresponding to the power control type includes at least signal power and/or interference power.

FIG. 15 shows an apparatus 1500 according to an embodiment of this application. The apparatus shown in FIG. 15 may be an implementation of a hardware circuit of the apparatus shown in FIG. 14. The apparatus is applicable to the flowchart shown above, and performs the functions of the first terminal device or the second terminal device in the foregoing method embodiments.

For ease of description, FIG. 15 shows only main components of the apparatus.

An apparatus 1500 shown in FIG. 15 includes a communication interface 1510, a processor 1520, and a memory 1530. The memory 1530 is configured to store program instructions and/or data. The processor 1520 may cooperate with the memory 1530 for operation. The processor 1520 may execute the program instructions stored in the memory 1530. When the instructions or the program stored in the memory 1530 is executed, the processor 1520 is configured to perform an operation performed by the processing module 1401 in the foregoing embodiment, and the communication interface 1510 is configured to perform an operation performed by the transceiver module 1402 in the foregoing embodiment.

The memory 1530 is coupled to the processor 1520. Couplings in this embodiment of this application are indirect couplings or communication connections between apparatuses, units, or modules, may be electrical, mechanical, or in another form, and are used for information exchange between the apparatuses, the units, or the modules. At least one memory 1530 may be included in the processor 1520.

In this embodiment of this application, the communication interface may be a transceiver, a circuit, a bus, a module, or a communication interface of another type. In this embodiment of this application, when the communication interface is a transceiver, the transceiver may include an independent receiver and an independent transmitter, or may be a transceiver integrated with sending and receiving functions or a communication interface.

The apparatus 1500 may further include a communication line 1540. The communication interface 1510, the processor 1520, and the memory 1530 may be connected to each other by using the communication line 1540. The communication line 1540 may be a peripheral component interconnect (peripheral component interconnect, PCI for short) bus, an extended industry standard architecture (extended industry standard architecture, EISA for short) bus, or the like. The communication line 1540 may be classified into an address bus, a data bus, a control bus, and the like. For ease of representation, only one thick line is used to represent the bus in FIG. 15, but this does not mean that there is only one bus or only one type of bus.

Based on the foregoing content and a same concept, an embodiment of this application provides a chip system, including a processor, where the processor is coupled to a memory, the memory is configured to store a program or instructions, and when the program or the instructions are executed by the processor, the chip system is enabled to implement the method in any one of in the foregoing method embodiments.

Optionally, the chip system further includes an interface circuit, and the interface circuit is configured to exchange code instructions to the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips.

Based on the foregoing content and a same concept, an embodiment of this application provides a computer-readable storage medium. The computer-readable storage medium stores a computer program or instructions. When the computer program or the instructions are executed, a computer is enabled to perform the method in any one of the foregoing method embodiments.

Based on the foregoing content and a same concept, an embodiment of this application provides a computer program product. When a computer reads and executes the computer program product, the computer is enabled to perform the method in any one of the foregoing method embodiments.

Based on the foregoing content and a same concept, an embodiment of this application provides a communication system. The communication system includes the first terminal device, the second terminal device, and the first apparatus in the foregoing method embodiments.

It may be understood that various numbers in the embodiments of this application are merely used for differentiation for ease of description, and are not intended to limit the scope of the embodiments of this application. The sequence numbers of the foregoing processes do not mean execution sequences, and the execution sequences of the processes should be determined based on functions and internal logic of the processes.

It is clear that a person skilled in the art can make various modifications and variations to this application without departing from the scope of this application. In this way, this application is intended to cover these modifications and variations of this application provided that the modifications and variations fall within the scope of the claims of this application and their equivalent technologies.

## Claims

1. A resource allocation method, comprising:
sending, by a first terminal device, a resource request to a first apparatus, wherein the resource request is used to request a first resource and a second resource, the first resource is used by the first terminal device to send a first signal to a second terminal device, and the second resource is used by the first terminal device to receive a second signal from the second terminal device; and
receiving, by the first terminal device, a resource response sent by the first apparatus in response to the resource request.

2. The method according to claim 1, wherein the first apparatus is a group header terminal device or a network device.

3. The method according to claim 1 or 2, wherein the resource request comprises a data volume of first data in the first signal and/or a data volume of second data in the second signal.

4. The method according to any one of claims 1 to 3, wherein the resource request comprises a type of the first signal and/or a feedback type of the second signal.

5. The method according to claim 1 or 2, wherein the first terminal device comprises preconfigured information, the preconfigured information comprises a plurality of pieces of index information, and each piece of index information corresponds to one preset resource; and
the resource request comprises first index information, the first index information is one of the plurality of pieces of index information, and the first resource is a preset resource corresponding to the first index information.

6. The method according to claim 5, wherein the preconfigured information further comprises a plurality of types, and each type corresponds to at least one piece of index information; and
the resource request further comprises a type of the first signal, the type of the first signal is one of the plurality of types, and the first index information is one of at least one piece of index information corresponding to the type of the first signal.

7. The method according to claim 5 or 6, wherein the resource request further comprises feedback information of the second signal, and the feedback information of the second signal comprises a feedback type of the second signal and a feedback element corresponding to the feedback type of the second signal.

8. The method according to any one of claims 1 to 7, wherein the resource request further comprises feedback time information, and the feedback time information indicates a time domain resource and/or a period resource on which the second signal is carried.

9. The method according to any one of claims 1 to 8, further comprising:
sending, by the first terminal device, control information to the second terminal device, wherein the control information comprises first indication information and/or second indication information obtained by the first terminal device from the resource response, the first indication information indicates a resource on which the first terminal device sends the first signal, and the second indication information indicates a resource on which the first terminal device receives the second signal.

10. The method according to claim 9, wherein the control information further comprises a preset feedback type, and the feedback type of the second signal is the same as the preset feedback type in the control information.

11. The method according to any one of claims 1 to 10, further comprising:
sending, by the first terminal device, the first signal to the second terminal device based on the first indication information in the resource response, and/or receiving, by the first terminal device, the second signal from the second terminal device based on the second indication information in the resource response.

12. The method according to any one of claims 1 to 11, wherein the second signal is sent by the second terminal device to the first terminal device in response to the first signal.

13. The method according to any one of claims 1 to 12, wherein the feedback type comprises at least one or more of a channel state type, a positioning information type, an assistant information type, or a power control type, wherein
a feedback element corresponding to the channel state type comprises at least one or more of a channel quality indicator CQI, a rank indicator RI, and a precoding matrix indicator PMI;
a feedback element corresponding to the positioning information type comprises at least one or more of a round trip time RTT, an angle of arrival AoA, and an angle of departure AoD;
a feedback element corresponding to the assistant information type comprises at least one or more of a resource identifier, reference signal received power RSRP, and a signal to interference plus noise ratio SINR; and
a feedback element corresponding to the power control type comprises at least signal power and/or interference power

14. A resource allocation method, comprising:
receiving, by a first apparatus, a resource request from a first terminal device, wherein the resource request is used to request a first resource and a second resource, the first resource is used by the first terminal device to send a first signal to a second terminal device, and the second resource is used by the first terminal device to receive a second signal from the second terminal device; and
sending, by the first apparatus, a resource response to the first terminal device in response to the resource request.

15. The method according to claim 14, wherein the first apparatus is a group header terminal device or a network device.

16. The method according to claim 14 or 15, wherein the resource request comprises a data volume of first data in the first signal and/or a data volume of second data in the second signal.

17. The method according to any one of claims 14 to 16, wherein the resource request comprises a type of the first signal and/or a feedback type of the second signal.

18. The method according to claim 14 or 15, wherein the first apparatus comprises preconfigured information, the preconfigured information comprises a plurality of pieces of index information, and each piece of index information corresponds to one preset resource; and
the resource request comprises first index information, the first index information is one of the plurality of pieces of index information, and the first resource is a preset resource corresponding to the first index information.

19. The method according to claim 18, wherein the preconfigured information further comprises a plurality of types, and each type corresponds to at least one piece of index information; and
the resource request further comprises a type of the first signal, the type of the first signal is one of the plurality of types, and the first index information is one of at least one piece of index information corresponding to the type of the first signal.

20. The method according to claim 18 or 19, wherein the resource request further comprises feedback information of the second signal, and the feedback information of the second signal comprises a feedback type of the second signal and a feedback element corresponding to the feedback type of the second signal.

21. The method according to any one of claims 14 to 20, wherein the resource request further comprises feedback time information, and the feedback time information indicates a time domain resource and/or a period resource on which the second signal is carried.

22. The method according to any one of claims 14 to 21, wherein the sending, by the first apparatus, a resource response to the first terminal device in response to the resource request comprises:
generating, by the first apparatus, the resource response based on the resource request, wherein the resource response comprises first indication information and second indication information, the first indication information indicates a resource on which the first terminal device sends the first signal, and the second indication information indicates a resource on which the first terminal device receives the second signal; and
sending, by the first apparatus, the resource response to the first terminal device.

23. The method according to any one of claims 14 to 22, wherein the feedback type comprises at least one or more of a channel state type, a positioning information type, an assistant information type, and a power control type, wherein
a feedback element corresponding to the channel state type comprises at least one or more of a channel quality indicator CQI, a rank indicator RI, and a precoding matrix indicator PMI;
a feedback element corresponding to the positioning information type comprises at least one or more of a round trip time RTT, an angle of arrival AoA, and an angle of departure AoD;
a feedback element corresponding to the assistant information type comprises at least one or more of a resource identifier, reference signal received power RSRP, and a signal to interference plus noise ratio SINR; and
a feedback element corresponding to the power control type comprises at least signal power and/or interference power

24. A communication apparatus, comprising a module configured to perform the method according to any one of claims 1 to 13 or a module configured to perform the method according to any one of claims 14 to 23.

25. A communication apparatus, comprising a processor, wherein the processor executes a computer program to implement the method according to any one of claims 1 to 13 or the method according to any one of claims 14 to 23.

26. A computer-readable storage medium, wherein the computer-readable storage medium stores a computer program or instructions, and when the computer program is executed by a communication apparatus, the method according to any one of claims 1 to 13 is implemented, or the method according to any one of claims 14 to 23 is implemented.

27. A chip, comprising at least one processor and a memory, wherein
the processor is configured to store a computer program; and
the at least one processor is configured to execute the computer program, to implement the method according to any one of claims 1 to 13 or the method according to any one of claims 14 to 23.

28. A communication system, comprising a first terminal device, a second terminal device, and a first apparatus, wherein the first terminal device is configured to perform the method according to any one of claims 1 to 13, and the first apparatus is configured to perform the method according to any one of claims 14 to 23.
